# EUROPEAN PATENT APPLICATION

(11) **EP 4 665 077 A1**
(43) Date of publication of application: **17.12.2025**
(21) Application number: 24755997.4
(22) Date of filing: 31.01.2024
(51) Int. Cl.: H04W 76/27

(54) **COMMUNICATION METHOD AND COMMUNICATION APPARATUS**

(30) Priority: 16.02.2023 CN 202310144920
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Epping - Hermann - Fischer
(86) International application number: PCT/CN2024/074968
(87) International publication number: WO 2024/169623

(57) **Abstract**

A communication method and a communication apparatus may be applied to an integrated access and backhaul (integrated access and backhaul, IAB) network, so that a relay node can determine a target donor node to establish an F1 connection, to help improve service stability and flexibility. The method may include: receiving first configuration information from an operation, administration, and maintenance device, where the first configuration information includes identification information of P parent nodes and address information of M candidate target donor nodes, and there is a correspondence between the identification information of the P parent nodes and the address information of the M candidate target donor nodes; when it is determined to perform distributed unit migration, determining, based on the first configuration information, address information of a target donor node corresponding to identification information of a current parent node; and establishing an F1 connection to the target donor node based on the address information of the target donor node.

## Description

This application claims priority to Chinese Patent Application No. 202310144920.X, filed with the China National Intellectual Property Administration on February 16, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Integrated access and backhaul (integrated access and backhaul, IAB) can meet a requirement for dense deployment of a large quantity of base stations, and also meet a requirement for flexible deployment of optical fibers and reduce optical fiber deployment costs. The IAB is a relay solution, and may include an IAB node (IAB node) and an IAB donor (IAB donor). The IAB donor is a donor node of the IAB node. The IAB node may also be referred to as a relay node, a relay device, or the like. A child node of the IAB node may be another IAB node or user equipment (user equipment, UE), and a parent node of the IAB node may be another IAB node or another IAB donor. The IAB node includes a mobile terminal (mobile terminal, MT) part and a distributed unit (distributed unit, DU) part, and the two parts may be respectively represented as an IAB-MT and an IAB-DU. When the IAB node faces the parent node of the IAB node, the IAB node serves as an IAB-MT. When the IAB node faces the child node of the IAB node, the IAB node serves as an IAB-DU. The IAB donor may also be referred to as a donor device, a donor node, a donor base station (donor gNodeB, DgNB), or the like. The IAB donor includes a central unit (central unit, CU) part and a DU part, and the two parts may be respectively represented as an IAB-donor-CU and an IAB-donor-DU.

Currently, in an IAB network, a partial migration (partial migration) technology is introduced to further enhance network robustness and implement more refined load balancing and topology management. Further, considering mobility of the IAB node, distributed unit migration (DU migration) is introduced. The distributed unit migration enables the IAB-DU to establish an F1 connection to a target IAB-donor-CU. However, how the IAB node determines the target IAB-donor-CU to establish the F1 connection is an urgent problem to be resolved.

### SUMMARY

Embodiments of this application provide a communication method and a communication apparatus, so that a relay node can determine a target donor node to establish an F1 connection, to help improve service stability and flexibility.

According to a first aspect, an embodiment of this application provides a communication method. The method may be performed by a relay node, or may be performed by an apparatus matching the relay node, for example, performed by a processor, a chip, or a chip system. The method may include: receiving first configuration information from an operation, administration, and maintenance (operation, administration, and maintenance, OAM) device, where the first configuration information includes identification information of P parent nodes and address information of M candidate target donor nodes, there is a correspondence between the identification information of the P parent nodes and the address information of the M candidate target donor nodes, and P and M are integers greater than or equal to 1; when it is determined to perform distributed unit migration, determining, based on the first configuration information, address information of a target donor node corresponding to identification information of a current parent node; and establishing an F1 connection to the target donor node based on the address information of the target donor node.

It can be learned that, when it is determined to perform the distributed unit migration, the address information of the target donor node corresponding to the identification information of the current parent node may be determined based on the first configuration information, so that the F1 connection to the target donor node can be established, to help improve service stability and flexibility.

The P parent nodes may be understood as P parent nodes that may be connected to the relay node, in other words, P parent nodes that may be connected to the relay node when the relay node serves as an IAB-MT. The OAM device configures the identification information of the P parent nodes for the relay node by using the first configuration information. Optionally, the current parent node may be understood as a parent node that has established an RRC connection to the relay node, or a parent node that has established an RRC connection to the relay node before the F1 connection to the target donor node is established.

The M candidate target donor nodes may be understood as M optional target donor nodes configured by the OAM device for the relay node.

In a possible implementation, identification information of one parent node identifies the parent node. Optionally, identification information of one parent node uniquely identifies the parent node. For example, identification information of a p^{th} parent node may include cell identification information of a cell controlled by the p^{th} parent node and/or a node identifier of the p^{th} parent node, where p is an integer greater than or equal to 1 and less than or equal to P.

In a possible implementation, when first indication information is received, it is determined to perform the distributed unit migration. The first indication information indicates to perform the distributed unit migration. The first indication information may be received before the first configuration information is received or may be received after the first configuration information is received. A sequence of receiving the first indication information and the first configuration information is not limited in this embodiment of this application. It can be learned that the relay node may be triggered, by using the first indication information, to perform the distributed unit migration, so that when determining the target donor node, the relay node may establish the F1 connection to the target donor node.

Optionally, the first indication information is from a first donor node, and the first donor node is a donor node corresponding to an established F1 connection. In other words, the relay node receives the first indication information from the first donor node, and the relay node has established the F1 connection to the first donor node. It can be learned that the first donor node may indicate, by using the first indication information, the relay node to perform the distributed unit migration, so that the first donor node triggers the relay node to perform the distributed unit migration.

Optionally, the first indication information is from a second donor node, and the second donor node is a donor node corresponding to an established radio resource control (radio resource control, RRC) connection. In other words, the relay node receives the first indication information from the second donor node, and the relay node has established the RRC connection to the second donor node. The first indication information may be carried in an RRC message sent by the second donor node to the relay node. It can be learned that the second donor node may indicate, by using the first indication information, the relay node to perform the distributed unit migration, so that the second donor node triggers the relay node to perform the distributed unit migration.

In a possible implementation, when the identification information of the current parent node belongs to the identification information of the P parent nodes, it is determined to perform the distributed unit migration. It can be learned that the relay node may determine, by using the identification information of the current parent node, whether to perform the distributed unit migration, to help improve proactivity of the relay node.

In a possible implementation, determining, based on the first configuration information, the address information of the target donor node corresponding to the identification information of the current parent node may include: determining, based on the first configuration information, address information of N candidate target donor nodes corresponding to the identification information of the current parent node; and determining the address information of the target donor node from the address information of the N candidate target donor nodes corresponding to the identification information of the current parent node, where N is an integer greater than or equal to 1 and less than or equal to M. When the identification information of the current parent node belongs to the identification information of the P parent nodes, the first configuration information may include the address information of the N candidate target donor nodes corresponding to the identification information of the current parent node, so that the relay node may select the address information of the target donor node from the address information of the N candidate target donor nodes, and establish the F1 connection to the target donor node. It can be learned that the relay node may determine the address information of the target donor node from the address information of the N candidate target donor nodes corresponding to the identification information of the current parent node, so that the F1 connection to the target donor node is established, to help improve service stability and flexibility.

In a possible implementation, the method further includes: receiving the identification information of the current parent node. Optionally, the relay node may obtain the identification information of the current parent node by using an RRC connection to the current parent node. For example, the relay node may obtain the identification information of the current parent node by using an RRC message sent by the current parent node. Optionally, the relay node may obtain the identification information of the current parent node by using broadcast information sent by the current parent node. It can be learned that the relay node may further determine, by obtaining the identification information of the current parent node, whether the identification information of the current parent node belongs to the identification information of the P parent nodes.

The identification information of the current parent node may include cell identification information of a cell controlled by the current parent node and/or a node identifier of the current parent node.

In a possible implementation, the first configuration information may further include node identifiers of the M candidate target donor nodes. A node identifier of one candidate target donor node identifies the candidate target donor node. A node identifier of a candidate target donor node is configured by using the first configuration information, so that the relay node can obtain both address information of the candidate target donor node and the node identifier of the candidate target donor node. Therefore, when determining the address information of the target donor node, the relay node can also determine a node identifier of the target donor node.

According to a second aspect, an embodiment of this application provides a communication method. The method may be performed by a relay node, or may be performed by an apparatus matching the relay node, for example, performed by a processor, a chip, or a chip system. The method may include: receiving first configuration information from an OAM device, where the first configuration information includes identification information of P source donor nodes and address information of M candidate target donor nodes, there is a correspondence between the identification information of the P source donor nodes and the address information of the M candidate target donor nodes, and P and M are integers greater than or equal to 1; when it is determined to perform distributed unit migration, determining, based on the first configuration information, address information of a target donor node corresponding to identification information of a first donor node, where the first donor node is a donor node corresponding to an established F1 connection; and establishing an F1 connection to the target donor node based on the address information of the target donor node.

It can be learned that, when it is determined to perform the distributed unit migration, the address information of the target donor node corresponding to the identification information of the first donor node may be determined based on the first configuration information, so that the F1 connection to the target donor node may be established, to help improve service stability and flexibility.

The P source donor nodes may be understood as P optional source donor nodes configured by the OAM device for the relay node. The source donor node is a donor node that establishes an F1 connection to the relay node before the relay node establishes the F1 connection to the target donor node. Optionally, the first donor node may be understood as a donor node that has established the F1 connection to the relay node when it is determined to perform the distributed unit migration, or a donor node that has established the F1 connection to the relay node before the F1 connection to the target donor node is established.

The M candidate target donor nodes may be understood as M optional target donor nodes configured by the OAM device for the relay node.

In a possible implementation, identification information of one source donor node identifies the source donor node. Optionally, identification information of one source donor node uniquely identifies the source donor node. For example, identification information of a p^{th} source donor node may include one or more of the following information: cell identification information of a cell controlled by the p^{th} source donor node, a node name of the p^{th} source donor node, address information of the p^{th} source donor node, and a node identifier of the p^{th} source donor node, where p is an integer greater than or equal to 1 and less than or equal to P.

In a possible implementation, when first indication information is received, it is determined to perform the distributed unit migration. The first indication information indicates to perform the distributed unit migration. The first indication information may be received before the first configuration information is received or may be received after the first configuration information is received. A sequence of receiving the first indication information and the first configuration information is not limited in this embodiment of this application. It can be learned that the relay node may be triggered, by using the first indication information, to perform the distributed unit migration, so that when determining the target donor node, the relay node may establish the F1 connection to the target donor node.

Optionally, the first indication information is from the first donor node. It can be learned that the first donor node may indicate, by using the first indication information, the relay node to perform the distributed unit migration, so that the first donor node triggers the relay node to perform the distributed unit migration.

Optionally, the first indication information is from a second donor node, and the second donor node is a donor node corresponding to an established RRC connection. In other words, the relay node receives the first indication information from the second donor node, and the relay node has established the RRC connection to the second donor node. The first indication information may be carried in an RRC message sent by the second donor node to the relay node. It can be learned that the second donor node may indicate, by using the first indication information, the relay node to perform the distributed unit migration, so that the second donor node triggers the relay node to perform the distributed unit migration.

In a possible implementation, when the identification information of the first donor node belongs to the identification information of the P source donor nodes, it is determined to perform the distributed unit migration. It can be learned that the relay node may determine, by using the identification information of the first donor node, whether to perform the distributed unit migration, to help improve proactivity of the relay node.

In a possible implementation, determining, based on the first configuration information, the address information of the target donor node corresponding to the identification information of the first donor node may include: determining, based on the first configuration information, address information of N candidate target donor nodes corresponding to the identification information of the first donor node; and determining the address information of the target donor node from the address information of the N candidate target donor nodes corresponding to the identification information of the first donor node, where N is an integer greater than or equal to 1 and less than or equal to M. When the identification information of the first donor node belongs to the identification information of the P source donor nodes, the first configuration information may include the address information of the N candidate target donor nodes corresponding to the identification information of the first donor node, so that the relay node may select the address information of the target donor node from the address information of the N candidate target donor nodes, and establish the F1 connection to the target donor node. It can be learned that the relay node may determine the address information of the target donor node from the address information of the N candidate target donor nodes corresponding to the identification information of the first donor node, the F1 connection to the target donor node is established, to help improve service stability and flexibility.

In a possible implementation, the method further includes: receiving the identification information of the first donor node. Optionally, the relay node may obtain the identification information of the first donor node by using the established F1 connection to the first donor node. It can be learned that the relay node may further determine, by obtaining the identification information of the first donor node, whether the identification information of the first donor node belongs to the identification information of the P source donor nodes.

The identification information of the first donor node may include one or more of the following information: cell identification information of a cell controlled by the first donor node, a node name of the first donor node, address information of the first donor node, and a node identifier of the first donor node.

In a possible implementation, the first configuration information may further include node identifiers of the M candidate target donor nodes. A node identifier of one candidate target donor node identifies the candidate target donor node. A node identifier of a candidate target donor node is configured by using the first configuration information, so that the relay node can obtain both address information of the candidate target donor node and the node identifier of the candidate target donor node. Therefore, when determining the address information of the target donor node, the relay node can also determine a node identifier of the target donor node.

According to a third aspect, an embodiment of this application provides a communication method.

The method may be performed by a relay node, or may be performed by an apparatus matching the relay node, for example, performed by a processor, a chip, or a chip system. The method may include: receiving first configuration information from an OAM device, where the first configuration information includes identification information of P candidate target donor nodes and address information of M candidate target donor nodes, there is a correspondence between the identification information of the P candidate target donor nodes and the address information of the M candidate target donor nodes, and P and M are integers greater than or equal to 1; when it is determined to perform distributed unit migration, determining, based on the first configuration information, address information of a target donor node corresponding to identification information of Q candidate target donor nodes, where a first donor node is a donor node corresponding to an established F1 connection; and establishing an F1 connection to the target donor node based on the address information of the target donor node.

It can be learned that, when it is determined to perform the distributed unit migration, the address information of the target donor node corresponding to the identification information of the Q candidate target donor nodes may be determined based on the first configuration information, so that the F1 connection to the target donor node may be established, to help improve service stability and flexibility.

The P candidate target donor nodes may be understood as P optional candidate target donor nodes configured by the OAM device for the relay node. The identification information of the P candidate target donor nodes is used to determine whether the address information of the Q candidate target donor nodes belongs to the identification information of the P candidate target donor nodes. Optionally, the identification information of the Q candidate target donor nodes may be indicated by first indication information.

The M candidate target donor nodes may be understood as M optional target donor nodes configured by the OAM device for the relay node. The address information of the M candidate target donor nodes is used to determine the address information of the target donor node.

In a possible implementation, identification information of one candidate target donor node identifies the candidate target donor node. Optionally, identification information of one candidate target donor node uniquely identifies the candidate target donor node. For example, identification information of a p^{th} candidate target donor node may include one or more of the following information: cell identification information of a cell controlled by the p^{th} candidate target donor node, a node name of the p^{th} candidate target donor node, and a node identifier of the p^{th} candidate target donor node, where p is an integer greater than or equal to 1 and less than or equal to P.

In a possible implementation, when the first indication information is received, it is determined to perform the distributed unit migration. The first indication information indicates to perform the distributed unit migration. The first indication information may be received before the first configuration information is received or may be received after the first configuration information is received. A sequence of receiving the first indication information and the first configuration information is not limited in this embodiment of this application. It can be learned that the relay node may be triggered, by using the first indication information, to perform the distributed unit migration, so that when determining the target donor node, the relay node may establish the F1 connection to the target donor node.

In a possible implementation, the first indication information further indicates the identification information of the Q candidate target donor nodes. In other words, the relay node determines, based on the first configuration information, the address information of the target donor node corresponding to the identification information that is of the candidate target donor node and that is indicated by the first indication information.

Optionally, the first indication information is from a first donor node, and the first donor node is a donor node corresponding to an established F1 connection. In other words, the relay node receives the first indication information from the first donor node, and the relay node has established the F1 connection to the first donor node. It can be learned that the first donor node may indicate, by using the first indication information, the relay node to perform the distributed unit migration, so that the first donor node triggers the relay node to perform the distributed unit migration.

Optionally, the first indication information is from a second donor node, and the second donor node is a donor node corresponding to an established RRC connection. In other words, the relay node receives the first indication information from the second donor node, and the relay node has established the RRC connection to the second donor node. The first indication information may be carried in an RRC message sent by the second donor node to the relay node. It can be learned that the second donor node may indicate, by using the first indication information, the relay node to perform the distributed unit migration, so that the second donor node triggers the relay node to perform the distributed unit migration.

In a possible implementation, determining, based on the first configuration information, the address information of the target donor node corresponding to the identification information of the Q candidate target donor nodes may include: when identification information of at least one candidate target donor node in the identification information of the Q candidate target donor nodes belongs to the identification information of the P candidate target donor nodes, determining, based on the first configuration information, address information of N candidate target donor nodes corresponding to the identification information of the at least one candidate target donor node; and determining the address information of the target donor node from the address information of the N candidate target donor nodes corresponding to identification information of the first donor node, where N is an integer greater than or equal to 1 and less than or equal to M. When the identification information of the at least one candidate target donor node in the identification information of the Q candidate target donor nodes belongs to the identification information of the P candidate target donor nodes, the first configuration information may include the address information of the N candidate target donor nodes corresponding to the identification information of the at least one candidate target donor node, so that the relay node may select the address information of the target donor node from the address information of the N candidate target donor nodes, to establish the F1 connection to the target donor node. It can be learned that the relay node may determine the address information of the target donor node from the address information of the N candidate target donor nodes corresponding to the identification information of the at least one candidate target donor node, so that the F1 connection to the target donor node is established, to help improve service stability and flexibility.

In a possible implementation, the first configuration information may further include node identifiers of the M candidate target donor nodes. A node identifier of one candidate target donor node identifies the candidate target donor node. A node identifier of a candidate target donor node is configured by using the first configuration information, so that the relay node can obtain both address information of the candidate target donor node and the node identifier of the candidate target donor node. Therefore, when determining the address information of the target donor node, the relay node can also determine a node identifier of the target donor node.

According to a fourth aspect, an embodiment of this application provides a communication method. The method may be performed by a relay node, or may be performed by an apparatus matching the relay node, for example, performed by a processor, a chip, or a chip system. The method may include: sending first information to an OAM device, where the first information may include one or more of the following information: identification information of a first donor node, identification information of a current parent node, and identification information of Y candidate target donor nodes, the first donor node is a donor node corresponding to an established F1 connection, and Y is an integer greater than or equal to 1; receiving second configuration information from the OAM device, where the second configuration information includes address information of a target donor node corresponding to the first information; and establishing an F1 connection to the target donor node based on the address information of the target donor node.

It can be learned that the relay node sends the first information to the OAM device, to obtain, from the OAM device, the address information of the target donor node corresponding to the first information, so that the F1 connection to the target donor node may be established, to help improve service stability and flexibility.

In a possible implementation, the first information includes the identification information of the first donor node, and the method further includes:
receiving the identification information of the first donor node. Therefore, the relay node may send the identification information of the first donor node to the OAM device. Optionally, the relay node may obtain the identification information of the first donor node by using the established F1 connection to the first donor node.

The identification information of the first donor node may include one or more of the following information: cell identification information of a cell controlled by the first donor node, a node name of the first donor node, address information of the first donor node, and a node identifier of the first donor node.

In another possible implementation, the first information includes the identification information of the current parent node, and the method further includes:
receiving the identification information of the current parent node. Therefore, the relay node may send the identification information of the current parent node to the OAM device. Optionally, the relay node may obtain the identification information of the current parent node by using an RRC connection to the current parent node. For example, the relay node may obtain the identification information of the current parent node by using an RRC message sent by the current parent node. Optionally, the relay node may obtain the identification information of the current parent node by using broadcast information sent by the current parent node.

Optionally, the current parent node may be understood as a parent node that has established an RRC connection to the relay node, or a parent node that has established an RRC connection to the relay node before the F1 connection to the target donor node is established.

The identification information of the current parent node may include cell identification information of a cell controlled by the current parent node and/or a node identifier of the current parent node.

In a possible implementation, when it is determined to perform distributed unit migration, the first information is sent to the OAM device. In other words, when it is determined to perform the distributed unit migration, the relay node sends the first information to the OAM device, to obtain, from the OAM device, the address information of the target donor node corresponding to the first information.

Optionally, the method further includes: when second indication information is received, determining to perform the distributed unit migration. The second indication information indicates to perform the distributed unit migration. The second indication information may be received before the first information is sent. It can be learned that the relay node may be triggered, by using the second indication information, to perform the distributed unit migration, so that when determining the target donor node, the relay node may establish the F1 connection to the target donor node.

Optionally, the second indication information further indicates identification information of Z candidate target donor nodes, where Z is an integer greater than or equal to 1. The relay node may send the identification information of the candidate target donor node to the OAM device based on the identification information of the candidate target donor node indicated by the second indication information.

Optionally, the identification information of the Y candidate target donor nodes is identification information of a part or all of the Z candidate target donor nodes. In other words, the identification information of the Y candidate target donor nodes sent by the relay node to the OAM device may be identification information of a part or all of the candidate target donor nodes indicated by the second indication information.

Identification information of a y^{th} candidate target donor node may include one or more of the following information: cell identification information of a cell controlled by the y^{th} candidate target donor node, a node name of the y^{th} candidate target donor node, and a node identifier of the y^{th} candidate target donor node, where y is an integer greater than or equal to 1 and less than or equal to Y.

In a possible implementation, the second indication information is from the first donor node. It can be learned that the first donor node may indicate, by using the second indication information, the relay node to perform the distributed unit migration, so that the first donor node triggers the relay node to perform the distributed unit migration.

In another possible implementation, the second indication information is from a second donor node, and the second donor node is a donor node corresponding to the established RRC connection. It can be learned that the second donor node may indicate, by using the second indication information, the relay node to perform the distributed unit migration, so that the second donor node triggers the relay node to perform the distributed unit migration.

In a possible implementation, the second configuration information includes address information of N candidate target donor nodes corresponding to the first information, and the method further includes: determining the address information of the target donor node from the address information of the N candidate target donor nodes corresponding to the first information, where N is an integer greater than or equal to 1 and less than or equal to M.

In a possible implementation, the second configuration information may further include a node identifier of the target donor node.

According to a fifth aspect, an embodiment of this application provides a communication method. The method may be performed by an OAM device, or may be performed by an apparatus matching the OAM device, for example, performed by a processor, a chip, or a chip system. The method may include: receiving first information from a relay node, where the first information includes one or more of the following information: identification information of a first donor node, identification information of a current parent node of the relay node, and identification information of Y candidate target donor nodes, the first donor node is a donor node corresponding to an established F1 connection of the relay node, and Y is an integer greater than or equal to 1; and sending second configuration information to the relay node, where the second configuration information includes address information of a target donor node corresponding to the first information.

It can be learned that the OAM device may feed back, based on the first information, the address information of the target donor node corresponding to the first information to the relay node, so that the relay node establishes an F1 connection to the target donor node based on the address information of the target donor node, to improve service stability and flexibility.

The identification information of the first donor node may include one or more of the following information: cell identification information of a cell controlled by the first donor node, a node name of the first donor node, address information of the first donor node, and a node identifier of the first donor node. The identification information of the current parent node may include cell identification information of a cell controlled by the current parent node and/or a node identifier of the current parent node. Identification information of a y^{th} candidate target donor node may include one or more of the following information: cell identification information of a cell controlled by the y^{th} candidate target donor node, a node name of the y^{th} candidate target donor node, and a node identifier of the y^{th} candidate target donor node, where y is an integer greater than or equal to 1 and less than or equal to Y.

Optionally, the current parent node may be understood as a parent node that has established an RRC connection to the relay node, or a parent node that has established an RRC connection to the relay node before the F1 connection to the target donor node is established. In a possible implementation, when it is determined, based on the first information, to perform distributed unit migration, the second configuration information is sent to the relay node. The OAM device may determine, based on the first information, whether to perform the distributed unit migration, and send the second configuration information to the relay node when determining to perform the distributed unit migration. Optionally, when receiving the second configuration information, the relay node may perform the distributed unit migration.

In a possible implementation, the second configuration information may further include a node identifier of the target donor node.

According to a sixth aspect, this application provides a communication apparatus. The communication apparatus may be a relay node, or may be an apparatus in the relay node, or may be an apparatus that can be used together with the relay node. The communication apparatus may alternatively be a chip system. The communication apparatus may perform the method according to any one of the first aspect to the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and beneficial effects according to any one of the first aspect to the fourth aspect.

According to a seventh aspect, this application provides a communication apparatus. The communication apparatus may be an OAM device, or may be an apparatus in the OAM device, or may be an apparatus that can be used together with the OAM device. The communication apparatus may alternatively be a chip system. The communication apparatus may perform the method according to the fifth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and beneficial effect according to the fifth aspect.

According to an eighth aspect, this application provides a communication apparatus. The communication apparatus includes a processor, the processor is coupled to a memory, the memory is configured to store a program or instructions, and when the program or the instructions are executed by the processor, the communication apparatus is enabled to perform the method according to any one of the first aspect to the fifth aspect.

According to a ninth aspect, this application provides a communication apparatus. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the first aspect to the fifth aspect by using a logic circuit or executing code instructions.

According to a tenth aspect, this application provides a computer-readable storage medium. The computer-readable storage medium stores a computer program or instructions, and when the computer program or the instructions are executed by a communication apparatus, the method according to any one of the first aspect to the fifth aspect is implemented.

According to an eleventh aspect, this application provides a computer program product including instructions. When a communication apparatus reads and executes the instructions, the communication apparatus is enabled to perform the method according to any one of the first aspect to the fifth aspect.

### BRIEF DESCRIPTION OF DRAWINGS

FIG. 1 is a diagram of a wireless relay scenario;
FIG. 2A is an example diagram of a partial migration (partial migration) scenario;
FIG. 2B is an example diagram of a distributed unit migration (DU migration) scenario;
FIG. 2C is an example diagram of another distributed unit migration scenario;
FIG. 3 is an example diagram of a system architecture to which an embodiment of this application is applied;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a schematic flowchart of yet another communication method according to an embodiment of this application;
FIG. 8 is a schematic flowchart of further another communication method according to an embodiment of this application;
FIG. 9 is a diagram of a structure of a communication apparatus according to this application; and
FIG. 10 is a diagram of a structure of another communication apparatus according to an embodiment of this application.

### DESCRIPTION OF EMBODIMENTS

In this application, words such as "first" and "second" are used to distinguish between same items or similar items that have basically a same function or purpose. A person skilled in the art may understand that the words such as "first" and "second" do not limit a quantity or an execution sequence, and the words such as "first" and "second" do not indicate a definite difference. A term "and/or" describes only an association relationship between associated objects and indicates that there may be three relationships. For example, A and/or B may represent the following three cases: Only A exists, both A and B exist, and only B exists. The character "/" generally indicates an "or" relationship between the associated objects.

It should be understood that, in this application, "at least one" means one or more, and "a plurality of" means two or more. In addition, "equal to" in this application may be used together with "greater than", or may be used together with "less than". In a case in which "equal to" and "greater than" are used together, a technical solution corresponding to "greater than" is used; and in a case in which "equal to" and "less than" are used together, a technical solution corresponding to "less than" is used.

The following first describes related names or terms in this application, to facilitate understanding by a person skilled in the art.

### 1. IAB network

Compared with 4th-generation (4th-generation, 4G) mobile communication, 5th-generation (5th-generation, 5G) mobile communication imposes a stricter requirement on network performance indicators. For example, a capacity is increased by 1000 times, wider coverage is required, and an ultra-high reliable and low latency is required. In consideration of high-frequency carrier frequency resources are abundant, to meet an ultra-high capacity requirement of 5G in a hotspot area, high-frequency small cell networking becomes increasingly popular. A high-frequency carrier has a poor propagation characteristic, is severely attenuated due to blocking, and has small coverage. Therefore, a large quantity of small cells need to be densely deployed. Correspondingly, it is costly to provide optical fiber backhaul for the large quantity of densely deployed small cells, and construction is difficult. Therefore, an economical and convenient backhaul solution is needed. In addition, in consideration of the requirement for wide coverage, network coverage is provided in some remote areas, but optical fiber deployment is difficult and costly. Therefore, a flexible and convenient access and backhaul solution needs to be designed. An IAB technology solves the foregoing two problems by using a wireless transmission solution for both an access link (access link) and a backhaul link (backhaul link). This reduces deployment of optical fibers.

In the IAB network, an IAB node (IAB node) may also be referred to as a relay node (relay node, RN), a relay device, or the like. The IAB node may provide a radio access service for UE, and service data of the UE is transmitted by the IAB node by connecting to the IAB donor through the backhaul link.

The IAB node includes an IAB-MT and an IAB-DU. When facing a parent node of the IAB node, the IAB node may serve as an IAB-MT; and when facing a child node of the IAB node (the child node may be another IAB node or UE), the IAB node may be considered as a network device, that is, a role of an IAB-DU.

The IAB donor includes an IAB-donor-CU and an IAB-donor-DU. The IAB donor may be an access network device having a complete base station function, or may be an access network device in a form of separation between a CU and a DU. The IAB donor is connected to a core network element (for example, connected to a 5G core (5G core, 5GC) network element) that provides a service for the UE, and provides a wireless backhaul function for the IAB node. The IAB-donor CU may be in a form of separation between a control plane (control plane, CP) and a user plane (user plane, UP). For example, the IAB-donor-CU may include one IAB-donor-CU-CP and one (or more) IAB-donor-CU-UP.

The IAB node is connected to the core network through the IAB donor. For example, in a 5G architecture of (standalone, SA) networking, the IAB node is connected to the 5GC network element through the IAB donor. In a 5G architecture of non-standalone (non-standalone, NSA) networking (for example, dual connectivity (dual connectivity, DC) or multi-connectivity (multi-connectivity, MC)), on a primary path, the IAB node may be connected to an evolved packet core (evolved packet core, EPC) network through an evolved NodeB (evolved NodeB, eNB), or may be connected to the 5G core network through the IAB donor.

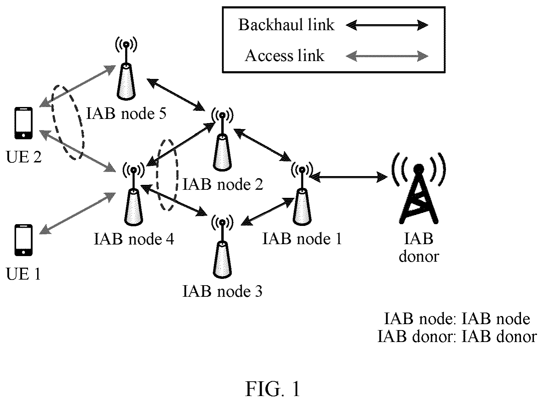

In the IAB network, one or more IAB nodes may be included on a transmission path between the UE and the IAB donor. Each IAB node maintains a backhaul link facing a parent node, and maintains an access link with a child node. If the child node of the IAB node is UE, a link between the IAB node and the UE is an access link. If the child node of the IAB node is another IAB node, a link between the IAB node and the another IAB node is a backhaul link. For example, as shown in a wireless relay scenario in FIG. 1, in a path "UE 1→IAB node 4→IAB node 3→IAB node 1→IAB donor", the UE 1 accesses the IAB node 4 through an access link, the IAB node 4 is connected to the IAB node 3 through a backhaul link, the IAB node 3 is connected to the IAB node 1 through a backhaul link, and the IAB node 1 is connected to the IAB donor through a backhaul link. In FIG. 1, a black bidirectional arrow represents a backhaul link, and a gray bidirectional arrow represents an access link.

A relay node in embodiments of this application may be an access IAB node. The access IAB node refers to an IAB node accessed by the UE. For example, as shown in FIG. 1, in the path "UE 1→IAB node 4→IAB node 3→IAB node 1→IAB donor", the IAB node 4 is an access IAB node. Optionally, a relay node in embodiments of this application may alternatively be an intermediate IAB node. The intermediate IAB node is an IAB node that provides a backhaul service for the UE or the IAB node.

A donor node in embodiments of this application may be an IAB donor, and a CU and a DU of the IAB donor may use a separate architecture or may not use a separate architecture, depending on a specific situation.

### 2. Partial migration (partial migration)

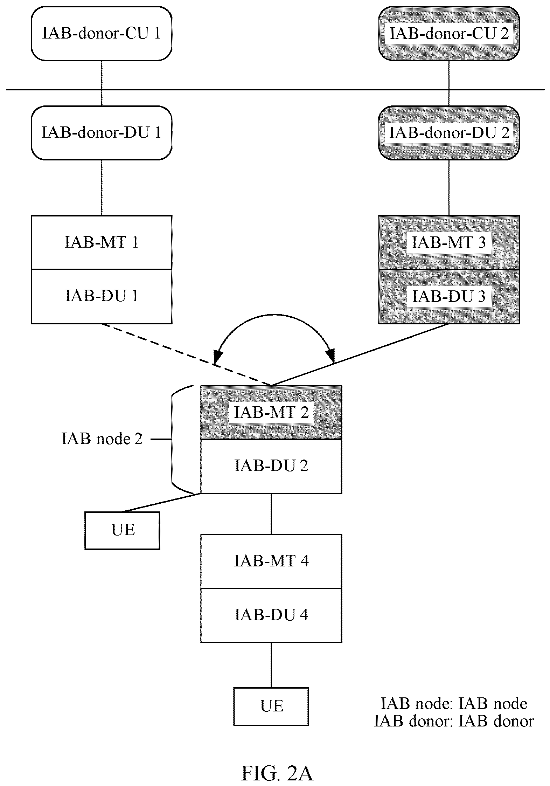

In the IAB network, a partial migration (partial migration) technology is introduced to further enhance network robustness and implement more refined load balancing and topology management. For example, for the partial migration technology, refer to FIG. 2A.

In the partial migration technology, an MT (that is, an IAB-MT 2 in FIG. 2A) of a boundary node (boundary IAB-node, for example, an IAB node 2 in FIG. 2A) is switched from a parent node (an IAB node 1 in FIG. 2A) to another parent node (an IAB node 3 in FIG. 2A), and the two parent nodes belong to topologies controlled by different IAB-donor-CUs. In other words, in FIG. 2A, the IAB node 1 belongs to a topology controlled by an IAB-donor-CU 1, and the IAB node 3 belongs to a topology controlled by an IAB-donor-CU 2. An essence of the partial migration is that an RRC connection between the IAB-MT 2 and the IAB-donor-CU is switched from the IAB-donor-CU 1 to the IAB-donor-CU 2, but an F1 connection between an IAB-DU 2 and the IAB-donor-CU is still an F1 connection between the IAB-DU 2 and the IAB-donor-CU 1. In other words, the F1 connection of the IAB-DU 2 is still terminated at the IAB-donor-CU 1, and is not migrated to the IAB-donor-CU 2 together with the IAB-MT 2. The RRC connection of the IAB node is switched, but the F1 connection is not switched. This process may be referred to as partial migration.

In FIG. 2A, the IAB-donor-CU 1 may be referred to as an F1-terminating donor-CU (F1-terminating donor-CU). In other words, the F1 connection of the IAB-DU 2 is terminated at the IAB-donor-CU 1. In FIG. 2A, the IAB-donor-CU 2 may be referred to as a non-F1-terminating donor-CU, that is, non-F1-terminating donor-CU.

### 3. Distributed unit migration (DU migration)

With development of communication technologies and evolution of standards, the IAB node may have mobility. For example, the IAB node may be installed on a moving object, and the IAB node may move as the moving object moves. For example, the IAB node may be installed on a vehicle, and moves as the vehicle moves. An IAB node installed on a vehicle may be referred to as a vehicle-mounted relay (vehicle-mounted relay, VMR) node. An IAB node with mobility may be referred to as a mobile IAB node (mobile IAB node, mIAB node).

For the mIAB node, if partial migration is still used, the F1 connection between the IAB-donor-CU and the IAB-DU cannot be maintained because a coverage area of the IAB-donor-CU is limited. Therefore, in consideration of mobility of the IAB node or a load balancing requirement on a radio access network (radio access network, RAN) side, the IAB node may trigger a distributed unit migration process by a source F1-terminating donor-CU (that is, source F1-terminating donor-CU) or an OAM device (for example, responsible for operating, managing, and maintaining the IAB node). In other words, the F1 connection of the IAB-DU is migrated from the source F1-terminating donor-CU to a target F1-terminating donor-CU (that is, target F1-terminating donor-CU). In other words, the source F1-terminating donor-CU or the OAM device may determine to which IAB-donor-CU the F1 connection of the IAB-DU is migrated.

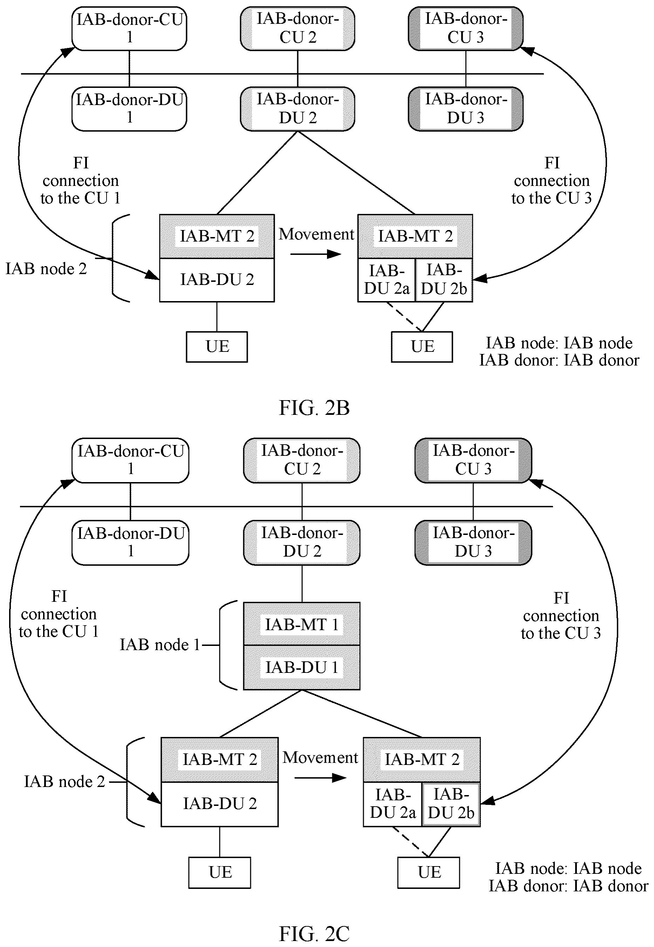

For example, refer to an example diagram of a distributed unit migration scenario shown in FIG. 2B. In FIG. 2B, the IAB node 2 includes two logical DUs, in other words, an IAB-DU 2 includes an IAB-DU 2a and an IAB-DU 2b. Before moving, the IAB-DU 2 has established an F1 connection to the IAB-donor-CU 1 by using the IAB-DU 2a, an IAB-MT 2 has established an RRC connection to the IAB-donor-CU 2, and the IAB-DU 2b is in a to-be-activated state, in other words, before the IAB node 2 moves, the F1 connection of the IAB-DU 2 is terminated at the IAB-donor-CU 1. After the IAB node 2 moves, the IAB-donor-CU 1 or the OAM device may determine to migrate the F1 connection of the IAB-DU 2 to an IAB-donor-CU 3, so as to trigger the IAB node 2 to perform the distributed unit migration process, that is, activate the IAB-DU 2b and establish the F1 connection to the IAB-donor-CU 3 by using the IAB-DU 2b. In this case, the IAB-MT 2 still maintains an RRC connection to the IAB-donor-CU 2.

It should be noted that, in FIG. 2B, an example in which the IAB-donor-CU 1, the IAB-donor-CU 2, and the IAB-donor-CU 3 are three different CUs is used. In actual application, the IAB-donor-CU 1 and the IAB-donor-CU 2 may be a same CU (that is, the source F1-terminating donor-CU and the non-F1-terminating donor-CU are a same CU). Alternatively, the IAB-donor-CU 2 and the IAB-donor-CU 3 are a same CU (that is, the non-F1-terminating donor-CU and the target F1-terminating donor-CU are a same CU).

It should be noted that, for the mIAB node, when the mIAB node needs to perform the distributed unit migration, the mIAB node may include two activated logical DUs (for example, the IAB-DU 2a and the IAB-DU 2b in FIG. 2B); and when the mIAB node does not need to perform the distributed unit migration, the mIAB node includes one logical DU (for example, the IAB-DU 2 in FIG. 2B, which may also be considered as the IAB-DU 2a).

The following describes a scenario and a system architecture to which this application is applied. The mIAB node may perform distributed unit migration. Although the source F1-terminating donor-CU or the OAM device may determine an IAB-donor-CU to which a logical DU to be activated of the mIAB node establishes an F1 connection, the mIAB node does not know which IAB-donor-CU to which the logical DU to be activated establishes the F1 connection. In other words, how the mIAB node determines a target IAB-donor-CU to establish the F1 connection is an urgent technical problem to be resolved.

In view of this, embodiments of this application provide a communication method and a communication apparatus. A relay node may determine a target donor node to establish an F1 connection, so that in a moving scenario, service stability and flexibility are improved, and user experience of UE is improved.

Embodiments of this application may be applied to a distributed unit migration scenario. For the distributed unit migration scenario, refer to a scenario example diagram shown in FIG. 2B. The IAB-donor-CU 1 and the IAB-donor-CU 2 in FIG. 2B may be a same CU, or the IAB-donor-CU 2 and the IAB-donor-CU 3 may be a same CU. FIG. 2B uses an example in which the IAB node 2 is directly connected to the IAB donor. In actual application, there may be one or more IAB nodes between the IAB node 2 and the IAB donor. In other words, there may be one or more IAB nodes between the IAB node 2 and the IAB donor 1, and/or there may be one or more IAB nodes between the IAB node 2 and the IAB donor 2, and/or there may be one or more IAB nodes between the IAB node 2 and the IAB donor 3.

For example, refer to an example diagram of another distributed unit migration scenario shown in FIG. 2C. In FIG. 2C, the IAB node 2 establishes an RRC connection to the IAB donor 2 through the IAB node 1. The IAB node 1 is a parent node of IAB node 2.

Embodiments of this application are applicable to an IAB system, and are applicable to another relay system other than the IAB system.

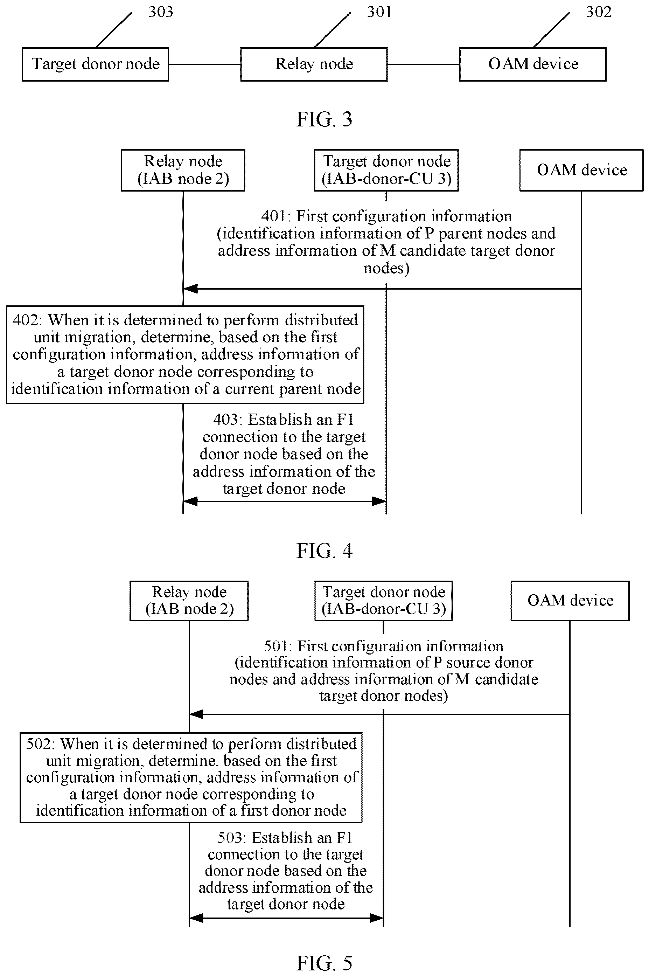

FIG. 3 is an example diagram of a system architecture to which an embodiment of this application is applied. The system architecture shown in FIG. 3 includes a relay node 301, an OAM device 302, and a target donor node 303.

The relay node 301 is configured to provide access and backhaul services for a child node of the relay node 301 or UE. In this embodiment of this application, the relay node 301 has mobility, and may be an access IAB node, or may be an intermediate IAB node, depending on a specific situation. The OAM device 302 is mainly responsible for operating, managing, and maintaining the relay node. The OAM device may be understood as a network management device or platform responsible for operating, managing, and maintaining the relay node.

The target donor node 303 is configured to establish an F1 connection to the relay node 301 when the relay node 301 performs distributed unit migration. Specifically, a CU of the target donor node 303 may establish an F1 connection to the relay node 301.

This embodiment of this application is applied to the distributed unit migration scenario. The system architecture shown in FIG. 3 may further include a first donor node and a second donor node (not shown in FIG. 3).

The relay node 301 has established an F1 connection to the first donor node. Before the relay node 301 determines to perform the distributed unit migration, the relay node 301 has established an F1 connection to a CU of the first donor node by using an activated DU. When the relay node 301 determines to perform the distributed unit migration, the relay node 301 may activate a to-be-activated DU, and the DU is configured to establish the F1 connection to the CU of the target donor node 303 after the DU is activated. The CU of the first donor node may be understood as a source F1-terminating donor-CU, and the CU of the target donor node 303 may be understood as a target F1-terminating donor-CU. For example, the CU of the first donor node may be the IAB-donor-CU 1 in FIG. 2B or FIG. 2C, and the CU of the target donor node 303 may be the IAB-donor-CU 3 in FIG. 2B or FIG. 2C.

The relay node 301 has established an RRC connection to the second donor node. Specifically, an MT of the relay node 301 has established an RRC connection to a CU of the second donor node. For example, the CU of the second donor node may be the IAB-donor-CU 2 in FIG. 2B or FIG. 2C.

It should be noted that the CU of the first donor node and the CU of the second donor node may be a same CU, or the CU of the second donor node and the CU of the target donor node 303 may be a same CU.

The following describes a communication method provided in embodiments of this application. Embodiments of this application are described by using an example in which a relay node is the IAB node 2 in FIG. 2B or FIG. 2C, a CU of a first donor node is the IAB-donor-CU 1 in FIG. 2B or FIG. 2C, a CU of a second donor node is the IAB-donor-CU 2 in FIG. 2B or FIG. 2C, and a CU of a target donor node is the IAB-donor-CU 3 in FIG. 2B or FIG. 2C.

A precondition of this embodiment of this application is that before the IAB node 2 performs distributed unit migration, the IAB-DU 2 is connected to the IAB-donor-CU 1 through an F1 interface (that is, an F1 connection has been established), and the IAB-MT 2 is connected to the IAB-donor-CU 2 through a Uu interface (that is, an RRC connection has been established and the RRC connection is maintained).

FIG. 4 is a schematic flowchart of a communication method according to an embodiment of this application. The method may include but is not limited to the following steps.

401: An OAM device sends first configuration information to an IAB node 2. Correspondingly, the IAB node 2 receives the first configuration information from the OAM device. The first configuration information includes identification information of P parent nodes and address information of M candidate target donor nodes, there is a correspondence between the identification information of the P parent nodes and the address information of the M candidate target donor nodes, and both P and M are integers greater than or equal to 1.

The first configuration information may be understood as pre-configured information. In other words, the OAM device may pre-configure the identification information of the P parent nodes and the address information of the M candidate target donor nodes for the IAB node 2, and send the information to the IAB node 2 by using the first configuration information. Optionally, the OAM device may alternatively pre-configure the correspondence between the identification information of the P parent nodes and the address information of the M candidate target donor nodes for the IAB node 2, and send the correspondence to the IAB node 2 by using the first configuration information.

The P parent nodes may be understood as P parent nodes that are configured by the OAM device for the IAB node 2 and that can be connected to the IAB node 2, that is, P parent nodes that can be connected to the IAB node 2 through RRC when the IAB node 2 serves as an IAB-MT.

The identification information of the P parent nodes is identification information of all of the P parent nodes, and identification information of one parent node identifies the parent node. Optionally, identification information of one parent node uniquely identifies the parent node. Broadcast information of a specific parent node may include identification information of the parent node.

Identification information of a p^{th} parent node may include cell identification information of a cell controlled by the p^{th} parent node and/or a node identifier of the p^{th} parent node, where p is an integer greater than or equal to 1 and less than or equal to P. In other words, identification information of any parent node in the P parent nodes may include cell identification information and/or a node identifier.

The cell identification information of the cell controlled by the p^{th} parent node may be understood as cell identification information of a cell controlled by a DU of the p^{th} parent node. Cell identification information of a cell may include one or more of the following: a cell global identifier (cell global identifier, CGI), a physical cell identifier (physical cell identifier, PCI), a logical cell identifier, a carrier identifier, tracking area code (tracking area code, TAC), radio access network area code (radio access network area code, RANAC), and the like. In a new radio (new radio, NR) system, the CGI may be a new radio cell global identifier (NR cell global identifier, NCGI). With development of communication technologies, the CGI may use another name. The TAC indicates a tracking area where the CGI, the PCI, or the logical cell identifier is located. The RANAC identifies a RAN domain in the TAC. The carrier identifier may include one or more of a carrier standard, a carrier frequency, and a carrier index.

The node identifier of the p^{th} parent node indicates a node identifier to which the p^{th} parent node belongs. For example, based on FIG. 2C, a parent node of the IAB-MT 2 is the IAB node 1, and a node identifier of the IAB node 1 may be a gNB ID to which the IAB-donor-CU 2 belongs.

The M candidate target donor nodes may be understood as M optional target donor nodes configured by the OAM device for a relay node. The address information of the M candidate target donor nodes is identification information of all of the M candidate target donor nodes. Address information of a specific candidate target donor node indicates an internet protocol (internet protocol, IP) address of a CU of the candidate target donor node. For example, when M is greater than 1, the address information of the M candidate target donor nodes may be an IP list, and the IP list includes IP addresses of M IAB-donor-CUs.

There is the correspondence between the identification information of the P parent nodes and the address information of the M candidate target donor nodes. The correspondence may be one-to-one, in other words, identification information of one parent node corresponds to address information of one candidate target donor node, and a value of P is the same as a value of M. The correspondence may alternatively be one-to-many, in other words, identification information of one parent node corresponds to address information of a plurality of candidate target donor nodes, and a value of M is greater than a value of P. In other words, identification information of one parent node corresponds to address information of N candidate target donor nodes, where N is an integer greater than or equal to 1 and less than or equal to M.

Optionally, the first configuration information may further include node identifiers of the M candidate target donor nodes. A node identifier of one candidate target donor node identifies the candidate target donor node. A node identifier of a candidate target donor node is configured by using the first configuration information, so that the relay node can obtain both address information of the candidate target donor node and the node identifier of the candidate target donor node. Therefore, when determining address information of a target donor node, the relay node can also determine a node identifier of the target donor node.

402: When it is determined to perform distributed unit migration, the IAB node 2 determines, based on the first configuration information, address information of a target donor node corresponding to identification information of a current parent node.

When it is determined to perform the distributed unit migration, the IAB node 2 activates an IAB-DU 2b, to perform the distributed unit migration. The IAB node 2 may determine, in the following manner 1 or manner 2, to perform the distributed unit migration.

Manner 1: When receiving first indication information, the IAB node 2 determines to perform the distributed unit migration. The first indication information indicates to perform the distributed unit migration. The IAB node 2 may receive the first indication information before receiving the first configuration information, or may receive the first indication information after receiving the first configuration information. A sequence of receiving the first indication information and the first configuration information is not limited in this embodiment of this application.

Optionally, the first indication information may be from an IAB-donor 1, and may be specifically from an IAB-donor-CU 1. The IAB-donor-CU 1 has established an F1 connection to an IAB-DU 2. In this case, the IAB-DU 2 may receive the first indication information from the IAB-donor-CU 1.

Optionally, the first indication information may be from an IAB-donor 2, and may be specifically from an IAB-donor-CU 2. The IAB-donor-CU 2 has established an RRC connection to the IAB-MT 2 and maintains the RRC connection. In this case, the IAB-MT 2 may receive the first indication information from the IAB-donor-CU 2.

Manner 2: The IAB node 2 determines whether the identification information of the current parent node belongs to the identification information of the P parent nodes, and if the identification information of the current parent node belongs to the identification information of the P parent nodes, the IAB node 2 determines to perform the distributed unit migration. That the identification information of the current parent node belongs to the identification information of the P parent nodes may alternatively be described as that the identification information of the P parent nodes includes the identification information of the current parent node, or that the identification information of the current parent node is included in the identification information of the P parent nodes, or the like. The current parent node may be understood as a parent node that has established an RRC connection to the IAB-MT 2, or a parent node that has established an RRC connection to the IAB-MT 2 before an F1 connection to the target donor node is established.

The identification information of the current parent node may include cell identification information of a cell controlled by the current parent node and/or a node identifier of the current parent node. For example, in FIG. 2C, a current parent node of the IAB-MT 2 is the IAB node 1, cell identification information of a cell controlled by the IAB node 1 is cell identification information of a cell controlled by the IAB-DU 1, and may include one or more of a CGI, a PCI, a logical cell identifier, a carrier identifier, a TAC, a RANAC, and the like. The node identifier of the IAB node 1 is a gNB ID to which the IAB-donor-CU 2 belongs.

Optionally, the IAB node 2 receives the identification information of the current parent node. Specifically, the IAB-MT 2 may obtain the identification information of the current parent node from the current parent node. For example, the IAB-MT 2 obtains the identification information of the current parent node through the RRC connection to the current parent node. For another example, the IAB-MT 2 may obtain the identification information of the current parent node by using broadcast information sent by the current parent node. The broadcast information sent by the current parent node may include the identification information of the current parent node.

Optionally, the IAB node 2 determines, based on the first configuration information, address information of N candidate target donor nodes corresponding to the identification information of the current parent node, and determines the address information of the target donor node from the address information of the N candidate target donor nodes corresponding to the identification information of the current parent node, where N is an integer greater than or equal to 1 and less than or equal to M.

When N is equal to 1, the IAB node 2 directly determines the address information of the candidate target donor node corresponding to the identification information of the current parent node as the address information of the target donor node. For example, if a CGI of a cell 1 controlled by the IAB-DU 1 corresponds to an IP address of an IAB-donor-CU 3, the address information of the target donor node is the IP address of the IAB-donor-CU 3.

When N is greater than 1, the IAB node 2 selects address information of one candidate target donor node from the address information of the N candidate target donor nodes corresponding to the identification information of the current parent node, and determines the address information of the candidate target donor node as the address information of the target donor node. For example, N=2, and the CGI of the cell 1 controlled by the IAB-DU 1 corresponds to the IP address of the IAB-donor-CU 3 and an IP address of an IAB-donor-CU 4. In this case, the IAB node 2 may select the IP address of the IAB-donor-CU 3 as the address information of the target donor node. When N is greater than 1, how the IAB node 2 selects address information of one candidate target donor node from the address information of the N candidate target donor nodes corresponding to the identification information of the current parent node is not limited in this embodiment of this application. For example, the IAB node 2 may perform random selection, or may perform selection based on whether the N candidate target donor nodes and the IAB-donor-CU 2 are IP-reachable (for example, select, as the address information of the target donor node, address information of a candidate target donor node that is IP-reachable to the IAB-donor-CU 2).

It may be understood that the identification information of the P parent nodes is used to determine whether the identification information of the current parent node belongs to the identification information of the P parent nodes. When the identification information of the current parent node belongs to the identification information of the P parent nodes, the address information of the M candidate target donor nodes is used to provide the address information of the target donor node corresponding to the identification information of the current parent node, so that the IAB node 2 establishes an F1 connection to the target donor node. Optionally, when the identification information of the current parent node belongs to the identification information of the P parent nodes, the IAB node 2 may further determine to perform the distributed unit migration. In other words, the identification information of the P parent nodes is pre-configured information for triggering the distributed unit migration, that is, pre-configured condition information for triggering the IAB node 2 to perform the distributed unit migration. The address information of the M candidate target donor nodes is requirement information configured for pre-establishing a new F1 connection for the IAB node 2.

For example, information included in the first configuration information may be presented in a form of a table. For example, P=2, M=2, and identification information of one parent node corresponds to address information of one candidate target donor node, as shown in Table 1.

**Table 1**

| Identification information of a parent node | Address information of a candidate target donor node |
|---|---|
| NCGI of the cell 1 controlled by an IAB node 1 | IP address of an IAB-donor-CU 3 |
| NCGI of a cell 3 controlled by an IAB node 3 | IP address of an IAB-donor-CU 4 |

Table 1 is used as an example. The first configuration information may be alternatively presented in another form. This is not limited in this embodiment of this application.

403: The IAB node 2 establishes the F1 connection to the target donor node based on the address information of the target donor node.

When obtaining the address information of the target donor node, the IAB node 2 may establish the F1 connection to the target donor node based on the address information of the target donor node, to complete the distributed unit migration. For example, when obtaining the IP address of the IAB-donor-CU 3, the IAB node 2 establishes an F1 connection to the IAB-donor-CU 3 by using the IP address of the IAB-donor-CU 3.

After establishing the F1 connection to the target donor node, the IAB node 2 may release an F1 connection that has been established between the IAB node 2 and a first donor node, to disconnect communication with the first donor node, so as to avoid a communication conflict. Alternatively, the IAB node 2 may maintain the F1 connection to the first donor node, to ensure service continuity. For example, after establishing the F1 connection to the IAB-donor-CU 3, the IAB node 2 may release an established F1 connection between an IAB-DU 2a (or the IAB-DU 2) and the IAB-donor-CU 1, or may maintain the F1 connection between the IAB-DU 2a and the IAB-donor-CU 1.

Optionally, when determining that a second donor node and the target donor node are IP-reachable, the IAB node 2 establishes the F1 connection to the target donor node based on the address information of the target donor node. For example, based on FIG. 2C, when determining that the IAB-donor-CU 2 and the IAB-donor-CU 3 are IP-reachable, the IAB node 2 establishes the F1 connection to the IAB-donor-CU 3 based on the IP address of the IAB-donor-CU 3. If two IAB-donor-CUs are IP-reachable, it means that data packets can be transmitted between the two IAB-donor-CUs through IP routes.

Optionally, when determining that the second donor node and the M candidate target donor nodes are IP-reachable, the OAM device sends the first configuration information to the IAB node 2.

In the embodiment shown in FIG. 4, when it is determined to perform the distributed unit migration, the IAB node 2 may determine, based on the first configuration information, the address information of the target donor node corresponding to the identification information of the current parent node, so that the F1 connection to the target donor node may be established, to help improve service stability and flexibility.

FIG. 5 is a schematic flowchart of another communication method according to an embodiment of this application. The method may include but is not limited to the following steps.

501: An OAM device sends first configuration information to an IAB node 2. Correspondingly, the IAB node 2 receives the first configuration information from the OAM device. The first configuration information includes identification information of P source donor nodes and address information of M candidate target donor nodes, there is a correspondence between the identification information of the P source donor nodes and the address information of the M candidate target donor nodes, and both P and M are integers greater than or equal to 1.

The first configuration information may be understood as pre-configured information. In other words, the OAM device may pre-configure the identification information of the P source donor nodes and the address information of the M candidate target donor nodes for the IAB node 2, and send the information to the IAB node 2 by using the first configuration information. Optionally, the OAM device may further pre-configure the correspondence between the identification information of the P source donor nodes and the address information of the M candidate target donor nodes for the IAB node 2, and send the correspondence to the IAB node 2 by using the first configuration information.

The P source donor nodes may be understood as P optional source donor nodes configured by the OAM device for the IAB node 2. The source donor node is a donor node that establishes an F1 connection to the IAB node 2 before the IAB node 2 establishes an F1 connection to a target donor node.

The identification information of the P source donor nodes is identification information of all of the P source donor nodes, and identification information of one source donor node identifies the source donor node. Optionally, identification information of one source donor node uniquely identifies the source donor node.

Identification information of a p^{th} source donor node may include one or more of the following information: cell identification information of a cell controlled by the p^{th} source donor node, a node name of the p^{th} source donor node, address information of the p^{th} source donor node, and a node identifier of the p^{th} source donor node, where p is an integer greater than or equal to 1 and less than or equal to P. In other words, identification information of any parent node in the P source donor nodes may include one or more of the foregoing information.

The cell identification information of the cell controlled by the p^{th} source donor node may be understood as cell identification information of a cell controlled by a CU of the p^{th} source donor node. Cell identification information of a cell may include one or more of the following: a CGI, a PCI, a logical cell identifier, a carrier identifier, a TAC, a RANAC, and the like.

The node name of the p^{th} source donor node is a name (name) of the CU of the p^{th} source donor node. For example, based on FIG. 2C, a node name of the IAB-donor-CU 1 is a name (name) of a gNB-CU 1.

The address information of the p^{th} source donor node is an IP address of the CU of the p^{th} source donor node.

The node identifier of the p^{th} source donor node is a node identifier to which the CU of the p^{th} source donor node belongs. For example, based on FIG. 2C, a node identifier of the IAB-donor-CU 1 is an gNB ID of an IAB-donor 1.

For the M candidate target donor nodes, refer to the specific descriptions of the M candidate target donor nodes in the embodiment shown in FIG. 4. Details are not described herein again.

There is the correspondence between the identification information of the P source donor nodes and the address information of the M candidate target donor nodes. The correspondence may be one-to-one, in other words, identification information of one source donor node corresponds to address information of one candidate target donor node, and a value of P is the same as a value of M. The correspondence may alternatively be one-to-many, in other words, identification information of one source donor node corresponds to address information of a plurality of candidate target donor nodes, and a value of M is greater than a value of P. In other words, identification information of one source donor node corresponds to address information of N candidate target donor nodes, where N is an integer greater than or equal to 1 and less than or equal to M.

Optionally, the first configuration information may further include node identifiers of the M candidate target donor nodes. A node identifier of one candidate target donor node identifies the candidate target donor node.

502: When it is determined to perform distributed unit migration, the IAB node 2 determines, based on the first configuration information, address information of a target donor node corresponding to identification information of a first donor node.

When it is determined to perform the distributed unit migration, the IAB node 2 activates an IAB-DU 2b, to perform the distributed unit migration. The IAB node 2 may determine, in the following manner 1 or manner 2, to perform the distributed unit migration.

Manner 1: When receiving first indication information, the IAB node 2 determines to perform the distributed unit migration. For the manner 1, refer to the specific descriptions of the manner 1 in the embodiment shown in FIG. 4. Details are not described herein again.

Manner 2: The IAB node 2 determines whether the identification information of the first donor node belongs to the identification information of the P source donor nodes, and if the identification information of the first donor node belongs to the identification information of the P source donor nodes, the IAB node 2 determines to perform the distributed unit migration. That the identification information of the first donor node belongs to the identification information of the P source donor nodes may be alternatively described as that the identification information of the P source donor nodes includes the identification information of the first donor node, or the identification information of the first donor node is included in the identification information of the P source donor nodes.

The first donor node is a donor node corresponding to the established F1 connection. In other words, the IAB node 2 has established an F1 connection to a CU of the first donor node. For example, based on FIG. 2C, the IAB-DU 2 has established the F1 connection to the IAB-donor-CU 1, and the IAB-donor-CU 1 is the CU of the first donor node.

Optionally, the IAB node 2 receives the identification information of the first donor node. Specifically, the IAB-DU 2 obtains the identification information of the first donor node from the CU of the first donor node. For example, the IAB-DU 2 interacts with the CU of the first donor node by using the F1 connection to the CU of the first donor node, to obtain the identification information of the first donor node (for example, a gNB ID to which the CU of the first donor node belongs).

Optionally, the IAB node 2 determines, based on the first configuration information, the address information of the N candidate target donor nodes corresponding to the identification information of the first donor node, and determines the address information of the target donor node from the address information of the N candidate target donor nodes corresponding to the identification information of the first donor node, where N is an integer greater than or equal to 1 and less than or equal to M. When N is equal to 1, for a process in which the IAB node 2 determines the address information of the target donor node, refer to the specific descriptions in the embodiment shown in FIG. 4. When N is greater than 1, for a process in which the IAB node 2 determines the address information of the target donor node, refer to the specific descriptions in the embodiment shown in FIG. 4.

It may be understood that the identification information of the P source donor nodes is used to determine whether the identification information of the first donor node belongs to the identification information of the P source donor nodes. When the identification information of the first donor node belongs to the identification information of the P source donor nodes, the address information of the M candidate target donor nodes is used to provide the address information of the target donor node corresponding to the identification information of the first donor node, so that the IAB node 2 establishes the F1 connection to the target donor node. Optionally, when the identification information of the first donor node belongs to the identification information of the P source donor nodes, the IAB node 2 may further determine to perform the distributed unit migration. In other words, the identification information of the P source donor nodes is pre-configured information for triggering the distributed unit migration, that is, pre-configured condition information for triggering the IAB node 2 to perform the distributed unit migration. The address information of the M candidate target donor nodes is requirement information configured for pre-establishing a new F1 connection for the IAB node 2.

For example, information included in the first configuration information may be presented in a form of a table. For example, P=2, M=2, and identification information of one source donor node corresponds to address information of one candidate target donor node, as shown in Table 2.

**Table 2**

| Identification information of a source donor node | Address information of a candidate target donor node |
|---|---|
| gNB ID to which an IAB-donor-CU 1 belongs | IP address of an IAB-donor-CU 3 |
| gNB ID to which an IAB-donor-CU 2 belongs | IP address of an IAB-donor-CU 4 |

Table 2 is used as an example. The first configuration information may be alternatively presented in another form. This is not limited in this embodiment of this application.

503: The IAB node 2 establishes the F1 connection to the target donor node based on the address information of the target donor node.

For an implementation process of step 503, refer to the specific descriptions in step 403 in the embodiment shown in FIG. 4. Details are not described herein again.

In the embodiment shown in FIG. 5, when it is determined to perform the distributed unit migration, the IAB node 2 may determine, based on the first configuration information, the address information of the target donor node corresponding to the identification information of the first donor node, so that the F1 connection to the target donor node may be established, to help improve service stability and flexibility.

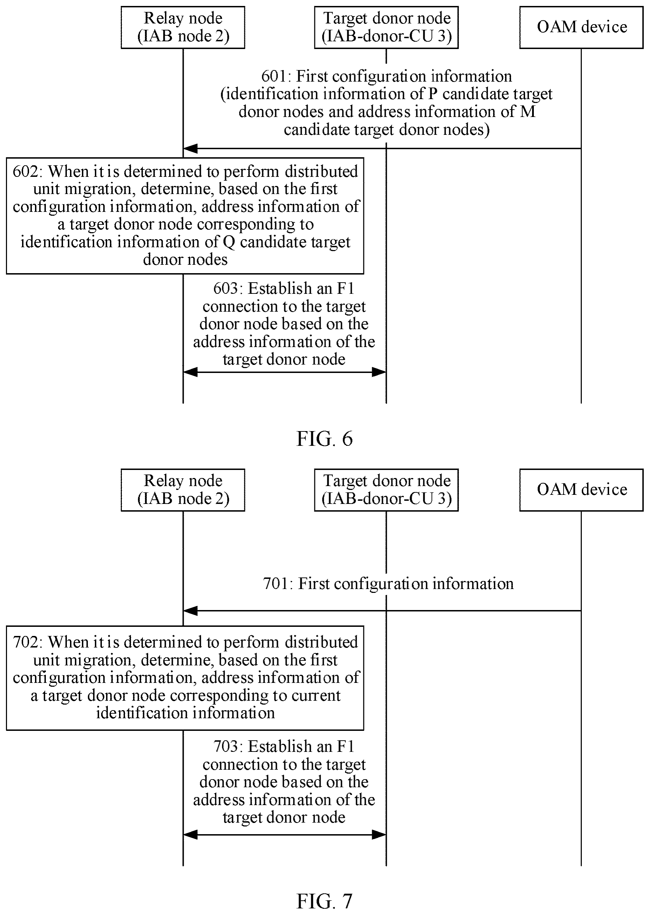

FIG. 6 is a schematic flowchart of still another communication method according to an embodiment of this application. The method may include but is not limited to the following steps. 601: An OAM device sends first configuration information to an IAB node 2. Correspondingly, the IAB node 2 receives the first configuration information from the OAM device. The first configuration information includes identification information of P candidate target donor nodes and address information of M candidate target donor nodes, there is a correspondence between the identification information of the P candidate target donor nodes and the address information of the M candidate target donor nodes, and both P and M are integers greater than or equal to 1.

The first configuration information may be understood as pre-configured information. In other words, the OAM device may pre-configure the identification information of the P candidate target donor nodes and the address information of the M candidate target donor nodes for the IAB node 2, and send the information to the IAB node 2 by using the first configuration information. Optionally, the OAM device may further pre-configure the correspondence between the identification information of the P candidate target donor nodes and the address information of the M candidate target donor nodes for the IAB node 2, and send the correspondence to the IAB node 2 by using the first configuration information.

The P candidate target donor nodes may be understood as P optional source donor nodes configured by the OAM device for the IAB node 2. The identification information of the P candidate target donor nodes is used to determine whether address information of Q candidate target donor nodes belongs to the identification information of the P candidate target donor nodes. In other words, the identification information of the P candidate target donor nodes is pre-configured information for triggering distributed unit migration, that is, pre-configured condition information for triggering the IAB node 2 to perform the distributed unit migration. Herein, Q is an integer greater than or equal to 1.

The identification information of the P candidate target donor nodes is identification information of all of the P candidate target donor nodes, and identification information of one candidate target donor node identifies the candidate target donor node. Optionally, identification information of one candidate target donor node uniquely identifies the candidate target donor node.

Identification information of a p^{th} candidate target donor node may include one or more of the following information: cell identification information of a cell controlled by the p^{th} candidate target donor node, a node name of the p^{th} candidate target donor node, and a node identifier of the p^{th} candidate target donor node, where p is an integer greater than or equal to 1 and less than or equal to P. In other words, identification information of any parent node in the P candidate target donor nodes may include one or more of the foregoing information.

The cell identification information of the cell controlled by the p^{th} candidate target donor node may be understood as cell identification information of a cell controlled by a CU of the p^{th} candidate target donor node. Cell identification information of a cell may include one or more of the following: a CGI, a PCI, a logical cell identifier, a carrier identifier, a TAC, a RANAC, and the like.

The node name of the p^{th} candidate target donor node is a name (name) of the CU of the p^{th} candidate target donor node.

The address information of the p^{th} candidate target donor node is an IP address of the CU of the p^{th} candidate target donor node.

The node identifier of the p^{th} candidate target donor node is a node identifier to which the CU of the p^{th} candidate target donor node belongs.

For the M candidate target donor nodes, refer to the specific descriptions of the M candidate target donor nodes in the embodiment shown in FIG. 4. Details are not described herein again. The address information of the M candidate target donor nodes is used to determine address information of a target donor node.

There is the correspondence between the identification information of the P candidate target donor nodes and the address information of the M candidate target donor nodes. The correspondence may be one-to-one or one-to-many. In other words, identification information of one candidate target donor node corresponds to address information of N candidate target donor nodes, where N is an integer greater than or equal to 1 and less than or equal to M.

Optionally, the first configuration information may further include node identifiers of the M candidate target donor nodes. A node identifier of one candidate target donor node identifies the candidate target donor node.

602: When it is determined to perform the distributed unit migration, the IAB node 2 determines, based on the first configuration information, address information of a target donor node corresponding to identification information of Q candidate target donor nodes.

When it is determined to perform the distributed unit migration, the IAB node 2 activates an IAB-DU 2b, to perform the distributed unit migration. The IAB node 2 may determine, in the following manner 1, to perform the distributed unit migration.

Manner 1: When receiving first indication information, the IAB node 2 determines to perform the distributed unit migration. For the manner 1, refer to the specific descriptions of the manner 1 in the embodiment shown in FIG. 4. Details are not described herein again.

Optionally, the first indication information further indicates the identification information of the Q candidate target donor nodes. It may be understood that current condition information that triggers the distributed unit migration may be indicated by the first indication information.

Optionally, the first indication information may be from an IAB-donor 1, and may be specifically from an IAB-donor-CU 1. The IAB-donor-CU 1 has established an F1 connection to an IAB-DU 2. In this case, the IAB-DU 2 may receive the first indication information from the IAB-donor-CU 1.

Optionally, the first indication information may be from an IAB-donor 2, and may be specifically from an IAB-donor-CU 2. The IAB-donor-CU 2 has established an RRC connection to an IAB-MT 2 and maintains the RRC connection. In this case, the IAB-MT 2 may receive the first indication information from the IAB-donor-CU 2.

In an implementation, the IAB-donor-CU 1 sends the first indication information to the IAB-donor-CU 2, and the IAB-donor-CU 2 sends the first indication information to the IAB-MT 2 by using an RRC message, and the first indication information indicates to perform the distributed unit migration. In another implementation, the IAB-donor-CU 1 sends, to the IAB-donor-CU 2, the first indication information including the identification information of the Q candidate target donor nodes, and the IAB-donor-CU 2 sends the first indication information to the IAB-MT 2 by using an RRC message. The first indication information indicates to perform the distributed unit migration, and indicates the identification information of the Q candidate target donor nodes. In still another implementation, the IAB-donor-CU 1 sends, to the IAB-donor-CU 2, indication information that indicates to perform the distributed unit migration, and the IAB-donor-CU 2 sends the first indication information to the IAB-MT 2 by using an RRC message. The first indication information indicates to perform the distributed unit migration, and indicates the identification information of the Q candidate target donor nodes.

Optionally, if identification information of at least one candidate target donor node in the identification information of the Q candidate target donor nodes belongs to the identification information of the P candidate target donor nodes, the IAB node 2 determines, based on the first configuration information, the address information of the N candidate target donor nodes corresponding to the identification information of the at least one candidate target donor node, and determines the address information of the target donor node from the address information of the N candidate target donor nodes corresponding to the identification information of the at least one candidate target donor node, where N is an integer greater than or equal to 1 and less than or equal to M. In other words, the identification information of the P candidate target donor nodes includes identification information of at least one of the Q candidate target donor nodes indicated by the first indication information. In this case, the IAB node 2 may determine, based on the first configuration information, the address information of the N candidate target donor nodes corresponding to the identification information of the at least one candidate target donor node, to determine the address information of the target donor node. When N is equal to 1, for a process in which the IAB node 2 determines the address information of the target donor node, refer to the specific descriptions in the embodiment shown in FIG. 4. When N is greater than 1, for a process in which the IAB node 2 determines the address information of the target donor node, refer to the specific descriptions in the embodiment shown in FIG. 4.

For example, information included in the first configuration information may be presented in a form of a table. For example, P=2, M=2, and identification information of one candidate target donor node corresponds to address information of one candidate target donor node, as shown in Table 3.

**Table 3**

| Identification information of a candidate target donor node | Address information of a candidate target donor node |
|---|---|
| gNB ID to which an IAB-donor-CU 3 belongs | IP address of the IAB-donor-CU 3 |
| gNB ID to which an IAB-donor-CU 5 belongs | IP address of an IAB-donor-CU 4 |

Table 3 is used as an example. The first configuration information may be alternatively presented in another form. This is not limited in this embodiment of this application. It should be noted that there may be an intersection or no intersection of the P candidate target donor nodes and the M candidate target donor nodes, and identification information of a specific candidate target donor node in the identification information of the P candidate target donor nodes corresponds to address information of the candidate target donor node in the address information of the M candidate target donor nodes, that is, as shown in the first row in Table 3.

603: The IAB node 2 establishes an F1 connection to the target donor node based on the address information of the target donor node.

For an implementation process of step 603, refer to the specific descriptions in step 403 in the embodiment shown in FIG. 4. Details are not described herein again.

In the embodiment shown in FIG. 6, when it is determined to perform the distributed unit migration, the IAB node 2 may determine, based on the first configuration information, the address information of the target donor node corresponding to the identification information of the Q candidate target donor nodes, so that the F1 connection to the target donor node may be established, to help improve service stability and flexibility.

FIG. 7 is a schematic flowchart of yet another communication method according to an embodiment of this application. The method may include but is not limited to the following steps.

701: An OAM device sends first configuration information to an IAB node 2. Correspondingly, the IAB node 2 receives the first configuration information from the OAM device.

Optionally, the OAM device may send the first configuration information to an IAB-MT 2. Optionally, the OAM device may send the first configuration information to an IAB-DU 2. Optionally, the OAM device may send the first configuration information to an IAB-DU 2a or an IAB-DU 2b. A message used by the OAM device to send the first configuration information to the IAB node 2 is not limited in this embodiment of this application.

In an implementation, the first configuration information includes identification information of P parent nodes and address information of M candidate target donor nodes, and there is a correspondence between the identification information of the P parent nodes and the address information of the M candidate target donor nodes. For this manner, refer to the specific descriptions of the embodiment shown in FIG. 4.

In another implementation, the first configuration information includes identification information of P source donor nodes and the address information of the M candidate target donor nodes, and there is a correspondence between the identification information of the P source donor nodes and the address information of the M candidate target donor nodes. For this manner, refer to the specific descriptions of the embodiment shown in FIG. 5.

In still another implementation, the first configuration information includes identification information of P candidate target donor nodes and the address information of the M candidate target donor nodes, and there is a correspondence between the identification information of the P candidate target donor nodes and the address information of the M candidate target donor nodes. For this manner, refer to the specific descriptions of the embodiment shown in FIG. 6.

Herein, both P and M are integers greater than or equal to 1.

Optionally, the foregoing three manners may alternatively be combined. For example, the first configuration information includes the identification information of the P parent nodes, the identification information of the P source donor nodes, and the address information of the M candidate target donor nodes. There is a correspondence between the identification information of the P parent nodes and the address information of the M candidate target donor nodes, and there is a correspondence between the identification information of the P source donor nodes and the address information of the M candidate target donor nodes. For another example, the first configuration information includes the identification information of the P parent nodes, the identification information of the P source donor nodes, the identification information of the P candidate target donor nodes, and the address information of the M candidate target donor nodes. There is a correspondence between the identification information of the P parent nodes and the address information of the M candidate target donor nodes, there is a correspondence between the identification information of the P source donor nodes and the address information of the M candidate target donor nodes, and there is a correspondence between the identification information of the P candidate target donor nodes and the address information of the M candidate target donor nodes.

It may be understood that the identification information of the P parent nodes, and/or the identification information of the P source donor nodes, and/or the identification information of the P candidate target donor nodes are/or pre-configured information for triggering distributed unit migration, that is, pre-configured condition information for triggering the IAB node 2 to perform the distributed unit migration. The address information of the M candidate target donor nodes is requirement information configured for pre-establishing a new F1 connection for the IAB node 2. It should be noted that, if the first configuration information does not include identification information of a parent node and/or identification information of a source donor node and/or identification information of a candidate target donor node corresponding to address information of the specific candidate target donor node, the IAB node 2 may determine not to perform the distributed unit migration. Alternatively, if the first configuration information does not include address information of a candidate target donor node corresponding to identification information of a specific parent node, and/or does not include address information of a candidate target donor node corresponding to identification information of a specific source donor node, and/or does not include address information of a candidate target donor node corresponding to identification information of the specific candidate target donor node, the IAB node 2 may determine not to perform the distributed unit migration. Optionally, if the first configuration information includes a correspondence between indication information and the identification information of the P parent nodes, and/or a correspondence between the indication information and the identification information of the P source donor nodes, and/or a correspondence between the indication information and the identification information of the P candidate target donor nodes, the indication information may indicate not to perform the distributed unit migration. In this case, even if identification information of a current parent node belongs to the identification information of the P parent nodes, and/or identification information of a first donor node belongs to the identification information of the P source donor nodes, and/or identification information of a specific candidate target donor node indicated by the first indication information belongs to the identification information of the P candidate target donor nodes, the IAB node 2 may also determine not to perform the distributed unit migration. In other words, even if identification information of a specific node is in the first configuration information, the IAB node 2 may determine, based on the indication information, not to perform the distributed unit migration.

702: When it is determined to perform the distributed unit migration, the IAB node 2 determines, based on the first configuration information, address information of a target donor node corresponding to current identification information.

The current identification information may include one or more of the following: the identification information of the current parent node, the identification information of the first donor node, and identification information of Q candidate target donor nodes. For the identification information of the current parent node, refer to the specific descriptions in the embodiment shown in FIG. 4. For the identification information of the first donor node, refer to the specific descriptions in the embodiment shown in FIG. 5. For the identification information of the Q candidate target donor nodes, refer to the specific descriptions in the embodiment shown in FIG. 6. Details are not described herein again.

The IAB node 2 may determine, in the following manner 1, manner 2, or manner 3, to perform the distributed unit migration.

Manner 1: When receiving the first indication information, the IAB node 2 determines to perform the distributed unit migration.

Optionally, the first indication information further indicates the identification information of the Q candidate target donor nodes. It may be understood that the current identification information that triggers the distributed unit migration may be indicated by the first indication information.

Optionally, the first indication information may be from an IAB-donor 1, and may be specifically from an IAB-donor-CU 1.

Optionally, the first indication information may be from an IAB-donor 2, and may be specifically from an IAB-donor-CU 2. In an implementation, the IAB-donor-CU 1 sends the first indication information to the IAB-donor-CU 2, and the IAB-donor-CU 2 sends the first indication information to the IAB-MT 2 by using an RRC message, and the first indication information indicates to perform the distributed unit migration. In another implementation, the IAB-donor-CU 1 sends, to the IAB-donor-CU 2, the first indication information including the identification information of the Q candidate target donor nodes, and the IAB-donor-CU 2 sends the first indication information to the IAB-MT 2 by using an RRC message. The first indication information indicates to perform the distributed unit migration, and indicates identification information of the Q candidate target donor nodes. In still another implementation, the IAB-donor-CU 1 sends, to the IAB-donor-CU 2, indication information that indicates to perform the distributed unit migration, and the IAB-donor-CU 2 sends the first indication information to the IAB-MT 2 by using an RRC message. The first indication information indicates to perform the distributed unit migration, and indicates the identification information of the Q candidate target donor nodes.

Manner 2: The IAB node 2 determines whether the identification information of the current parent node belongs to the identification information of the P parent nodes, and if the identification information of the current parent node belongs to the identification information of the P parent nodes, the IAB node 2 determines to perform the distributed unit migration. For the manner 2, refer to the specific descriptions of the manner 2 in the embodiment shown in FIG. 4. Details are not described herein again.

Manner 3: The IAB node 2 determines whether the identification information of the first donor node belongs to the identification information of the P source donor nodes, and if the identification information of the first donor node belongs to the identification information of the P source donor nodes, the IAB node 2 determines to perform the distributed unit migration. For the manner 3, refer to the specific descriptions of the manner 2 in the embodiment shown in FIG. 5. Details are not described herein again.

For an implementation process of step 702, refer to the specific descriptions of step 402, and/or the specific descriptions of step 502, and/or the specific descriptions of step 602.

703: The IAB node 2 establishes an F1 connection to the target donor node based on the address information of the target donor node.

For an implementation process of step 703, refer to the specific descriptions in step 403 in the embodiment shown in FIG. 4. Details are not described herein again.

In the embodiment shown in FIG. 7, when it is determined to perform the distributed unit migration, the IAB node 2 may determine, based on the first configuration information, the address information of the target donor node corresponding to the current identification information, so that the F1 connection to the target donor node may be established, to help improve service stability and flexibility.

As a special case of the embodiment shown in FIG. 7, because a source F1-terminating donor-CU (that is, a CU of the first donor node) may also determine an IAB-donor-CU to which a logical DU to be activated by the IAB node 2 establishes an F1 connection, a CU of the target donor node determined by the CU of the first donor node may be inconsistent with the CU of the target donor node determined by the IAB node 2. To solve this problem, the following operations are used.

Manner 1: An OAM device 1 of the first donor node negotiates with an OAM device 2 of the IAB node 2, and determines that when the CU of the target donor node determined by the CU of the first donor node is inconsistent with the CU of the target donor node determined by the IAB node 2, selection of the CU of the first donor node or selection of the IAB node 2 should be followed. A negotiation process between the OAM device 1 and the OAM device 2 may be performed before the IAB node 2 establishes the F1 connection to the CU of the target donor node, and a sequence of sending the first configuration information is not limited.

The OAM device 1 is responsible for operating, managing, and maintaining an IAB-donor and/or an IAB-donor-CU, and the OAM device 2 is responsible for operating, managing, and maintaining an IAB node. The OAM device 2 is the OAM device in FIG. 4 to FIG. 7.

Manner 2: After determining the CU of the target donor node, the CU of the first donor node notifies the IAB node 2 of address information and/or identification information of the CU of the target donor node, so that the IAB node 2 determines the address information of the CU of the target donor node without being based on the first configuration information.

Manner 3: After determining the CU of the target donor node based on the first configuration information, the IAB node 2 notifies the CU of the first donor node of the address information and/or the identification information of the CU of the target donor node, so that the CU of the first donor node does not need to indicate the CU of the target donor node to the IAB node 2.

Manner 4: The identification information of the Q candidate target donor nodes indicated by the first indication information is from an OAM device, that is, from the OAM device of the IAB node 2. In other words, the CU of the first donor node or a CU of a second donor node may obtain the identification information of the Q candidate target donor nodes from the OAM device, and send the identification information to the IAB node 2 by using the first indication information.

The manner 1 to the manner 4 are used as examples, and do not constitute a limitation on this embodiment of this application.

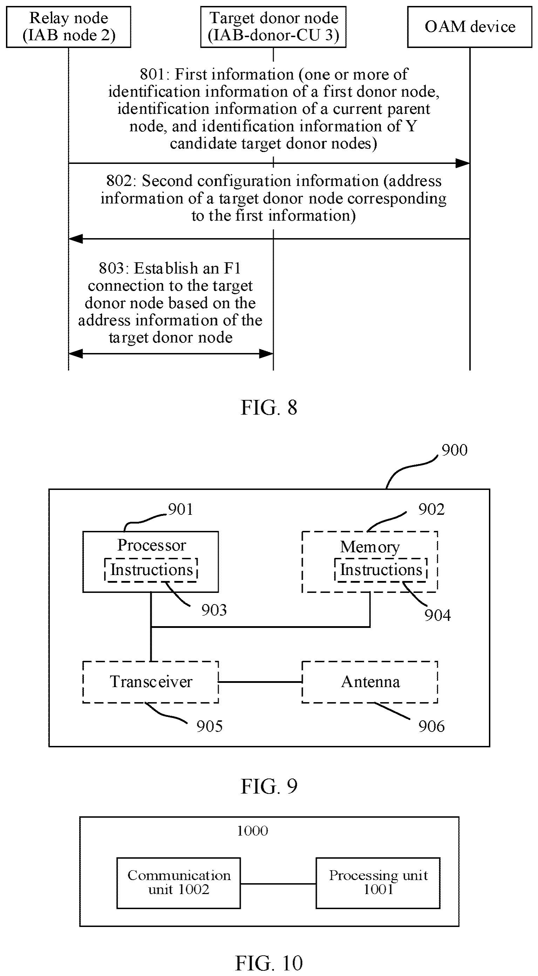

FIG. 8 is a schematic flowchart of further another communication method according to an embodiment of this application. The method may include but is not limited to the following steps. 801: An IAB node 2 sends first information to an OAM device. Correspondingly, the OAM device receives the first information from the IAB node 2.

Optionally, an IAB-MT 2 may send the first information to the OAM device. Optionally, an IAB-DU 2, an IAB-DU 2a, or an IAB-DU 2b sends the first information to the OAM device.

The first information may include one or more of identification information of a first donor node, identification information of a current parent node, and identification information of Y candidate target donor nodes. For the identification information of the current parent node, refer to the specific descriptions in the embodiment shown in FIG. 4. For the identification information of the first donor node, refer to the specific descriptions in the embodiment shown in FIG. 5. The identification information of the Y candidate target donor nodes may be identification information of a part or all of Z candidate target donor nodes indicated by second indication information. The second indication information indicates to perform distributed unit migration. Herein, Y and Z are integers greater than or equal to 1, and Y is less than or equal to Z.

In an implementation, the first information includes the identification information of the first donor node, and the IAB node 2 may receive the identification information of the first donor node. For this manner, refer to the specific descriptions of the embodiment shown in FIG. 5.

In another implementation, the first information includes the identification information of the current parent node, and the IAB node 2 may receive the identification information of the current parent node. For this manner, refer to the specific descriptions of the embodiment shown in FIG. 4.

Optionally, when it is determined to perform the distributed unit migration, the IAB node 2 sends the first information to the OAM device. In other words, when it is determined to perform the distributed unit migration, a relay node sends the first information to the OAM device, to obtain, from the OAM device, address information of a target donor node corresponding to the first information.

Optionally, when receiving the second indication information, the IAB node 2 determines to perform the distributed unit migration. The second indication information indicates to perform the distributed unit migration. The second indication information may be received before the first information is sent. The second indication information is the same as the first indication information in the foregoing embodiment. For details, refer to the descriptions of the first indication information in the foregoing embodiment. Details are not described herein again.

802: The OAM device sends second configuration information to the IAB node 2. Correspondingly, the IAB node 2 receives the second configuration information from the OAM device. The second configuration information includes the address information of the target donor node corresponding to the first information.

Optionally, the OAM device may send the second configuration information to the IAB-MT 2.

Optionally, when the IAB node 2 includes the IAB-DU 2, the OAM device may send the second configuration information to the IAB-DU 2. Optionally, when the IAB node 2 includes the IAB-DU 2a and the IAB-DU 2b, the OAM device may send the second configuration information to the IAB-DU 2a or the IAB-DU 2b. A message used by the OAM device to send the second configuration information to the IAB node 2 is not limited in this embodiment of this application. Optionally, the second configuration information includes address information of N target donor nodes corresponding to the first information, and the IAB node 2 may determine the address information of the target donor node from the address information of the N candidate target donor nodes corresponding to the first information. Optionally, the second configuration information directly carries the address information of the target donor node, so that signaling overheads can be reduced.

Optionally, when receiving the first information, the OAM device determines, based on the first information, whether to perform the distributed unit migration, and sends the second configuration information to the relay node when determining to perform the distributed unit migration. Optionally, when receiving the second configuration information, the relay node may perform the distributed unit migration.

Optionally, the second configuration information may further include a node identifier of the target donor node.

803: The IAB node 2 establishes an F1 connection to the target donor node based on the address information of the target donor node.

For an implementation process of step 803, refer to the specific descriptions in step 403 in the embodiment shown in FIG. 4. Details are not described herein again.

In the embodiment shown in FIG. 8, the IAB node 2 sends the first information to the OAM device, to obtain, from the OAM device, the address information of the target donor node corresponding to the first information, so that the F1 connection to the target donor node may be established, to help improve service stability and flexibility.

As a special case of the embodiment shown in FIG. 8, because a source F1-terminating donor-CU (that is, a CU of the first donor node) may also determine an IAB-donor-CU to which a logical DU to be activated by the IAB node 2 establishes an F1 connection, a CU of the target donor node determined by the CU of the first donor node may be inconsistent with the CU of the target donor node determined by the IAB node 2. To resolve this problem, any one of the manner 1 to the manner 4 in "as a special case of the embodiment shown in FIG. 7" may be used to avoid a case in which the determined CU of the target donor node is not unique. To resolve the special case in FIG. 8, the first configuration information in "as a special case of the embodiment shown in FIG. 7" may be replaced with the second configuration information in FIG. 8, and the first indication information may be replaced with the second indication information in FIG. 8, to avoid a case in which the determined CU of the target donor node is not unique.

Corresponding to the method provided in the foregoing method embodiments, embodiments of this application further provide a corresponding apparatus, including corresponding modules configured to execute the foregoing embodiments. The module may be software, hardware, or a combination of software and hardware.

FIG. 9 is a diagram of a structure of a communication apparatus. The communication apparatus 900 may be a relay node, or may be a chip, a chip system, a processor, or the like that supports the relay node in implementing the foregoing method. The communication apparatus 900 may alternatively be an OAM device, or may be a chip, a chip system, a processor, or the like that supports the OAM device in implementing the foregoing method. The apparatus may be configured to implement the method described in the foregoing method embodiments. For details, refer to the descriptions in the foregoing method embodiments.

The communication apparatus 900 may include one or more processors 901. The processor 901 may also be referred to as a processing unit, a processing module, or the like, and may implement a specific control function. The processor 901 may be a general-purpose processor, a special-purpose processor, or the like. The general-purpose processor may be, for example, a central processing unit, and the special-purpose processor may be, for example, a baseband processor. The baseband processor may be configured to process a communication protocol and communication data. The central processing unit may be configured to: control the communication apparatus (for example, a base station, a baseband chip, an MT, a DU, or a CU), execute a software program, and process data of the software program.

In an optional design, the processor 901 may also store instructions 903, and the instructions 903 may be run by the processor 901, so that the communication apparatus 900 performs the method described in the foregoing method embodiments.

In another optional design, the processor 901 may include a transceiver unit configured to implement receiving and sending functions. For example, the transceiver unit may be a transceiver circuit or an interface. The transceiver circuit, the interface, or the interface circuit configured to implement the receiving and sending functions may be separated, or may be integrated together. The transceiver circuit or the interface may be configured to read and write instructions, or the transceiver circuit or the interface may be configured to perform signal transmission.

Optionally, the communication apparatus 900 may include one or more memories 902, and the memories 902 may store instructions 904. The instructions 904 may be run on the processor 901, so that the communication apparatus 900 performs the method described in the foregoing method embodiments. Optionally, the memory 902 may further store data. Optionally, the processor 901 may alternatively store instructions and/or data. The processor 901 and the memory 902 may be separately disposed, or may be integrated together. For example, the correspondence described in the foregoing method embodiments may be stored in the memory 902, or stored in the processor 901.

Optionally, the communication apparatus 900 may further include a transceiver 905 and/or an antenna 906. The transceiver 905 may be referred to as a transceiver unit, a transceiver, a transceiver circuit, a transceiver apparatus, a transceiver module, or the like, and is configured to implement a transceiver function.

Optionally, in this embodiment of this application, when the communication apparatus 900 is a relay node, the communication apparatus 900 may include various function modules, configured to perform the steps performed by the IAB node 2 in the method embodiments.

Optionally, in this embodiment of this application, when the communication apparatus 900 is an OAM device, the communication apparatus 900 may include various function modules, configured to perform the steps performed by the OAM device in the method embodiments.

The processor and the transceiver described in this application may be implemented on an integrated circuit (integrated circuit, IC). The IC may include an analog IC, a radio frequency integrated circuit RFIC, a mixed signal IC, an application-specific integrated circuit (application-specific integrated circuit, ASIC), and the like. A printed circuit on a printed circuit board (printed circuit board, PCB) may implement an IC.

FIG. 10 is a diagram of a structure of another communication apparatus. The communication apparatus 1000 may be a relay node, or may be a component (for example, an integrated circuit or a chip) of the relay node. Alternatively, the communication apparatus may be another communication module, configured to implement the method in the method embodiments of this application. The communication apparatus 1000 may include a processing unit 1001 (or referred to as a processing module). Optionally, the communication apparatus may further include a communication unit 1002 (or referred to as a transceiver unit, a receiving unit, and/or a sending unit). Optionally, the communication apparatus may further include a storage unit (or referred to as a storage module). Optionally, the communication apparatus may be an OAM device, or may be a component (for example, an integrated circuit or a chip) of the OAM device.

In one possible design, one or more units as shown in FIG. 10 may be implemented by one or more processors, or by one or more processors and a memory, or by one or more processors and a transceiver, or by one or more processors, a memory, and a transceiver. This is not limited in this embodiment of this application. The processor, the memory, and the transceiver may be disposed separately, or may be integrated.

Optionally, the modules in the communication apparatus 1000 in this embodiment of this application may be configured to perform the steps performed by the IAB node 2 in the method embodiments. For example, the communication unit 1002 is configured to receive first configuration information from an OAM device. The first configuration information includes identification information of P parent nodes and address information of M candidate target donor nodes, there is a correspondence between the identification information of the P parent nodes and the address information of the M candidate target donor nodes, and P and M are integers greater than or equal to 1. The processing unit 1001 is configured to: when it is determined to perform distributed unit migration, determine, based on the first configuration information, address information of a target donor node corresponding to identification information of a current parent node; and establish, based on the address information of the target donor node, an F1 connection to the target donor node by using the communication unit 1002.

Optionally, the modules in the communication apparatus 1000 in this embodiment of this application may be configured to perform the steps performed by the OAM device in the method embodiments. For example, the communication unit 1002 is configured to send the first configuration information to the IAB node 2. The first configuration information includes the identification information of the P parent nodes and the address information of the M candidate target donor nodes, there is the correspondence between the identification information of the P parent nodes and the address information of the M candidate target donor nodes, and P and M are integers greater than or equal to 1.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical block) and steps (step) listed in embodiments of this application may be implemented by using electronic hardware, computer software, or a combination thereof. Whether the functions are implemented by using hardware or software depends on particular applications and a design requirement of an entire system. A person skilled in the art may use various methods to implement the functions for corresponding applications, but it should not be considered that the implementation goes beyond the scope of embodiments of this application.

It may be understood that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, RAMs in a plurality of forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

It may be understood that an "embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

The correspondences shown in the tables in this application may be configured, or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may understand that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing system, apparatus, and unit, refer to corresponding processes in the foregoing method embodiments. Details are not described herein again.

It may be understood that the system, apparatus, and method described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

For same or similar parts in embodiments of this application, refer to each other. In embodiments of this application and the implementations/implementation methods in embodiments, unless otherwise specified and a logical conflict occurs, terms and/or descriptions between different embodiments and between the implementations/implementation methods in embodiments are consistent and may be mutually referenced, Technical features in the different embodiments and the implementation/implementation methods in embodiments may be combined to form a new embodiment, implementation, or implementation method based on an internal logical relationship thereof. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving first configuration information from an operation, administration, and maintenance device, wherein the first configuration information comprises identification information of P parent nodes and address information of M candidate target donor nodes, there is a correspondence between the identification information of the P parent nodes and the address information of the M candidate target donor nodes, and P and M are integers greater than or equal to 1;
when it is determined to perform distributed unit migration, determining, based on the first configuration information, address information of a target donor node corresponding to identification information of a current parent node; and
establishing an F1 connection to the target donor node based on the address information of the target donor node.

2. The method according to claim 1, wherein the method further comprises:
sending identification information of the target donor node to a CU of a first donor node, wherein the first donor node is a donor node corresponding to an established F1 connection.

3. The method according to claim 1 or 2, wherein identification information of a p^{th} parent node comprises cell identification information of a cell controlled by the p^{th} parent node and/or a node identifier of the p^{th} parent node, wherein p is an integer greater than or equal to 1 and less than or equal to P.

4. The method according to any one of claims 1 to 3, wherein the method further comprises:
when first indication information is received, determining to perform the distributed unit migration, wherein the first indication information indicates to perform the distributed unit migration.

5. The method according to claim 4, wherein the first indication information is from a first donor node, and the first donor node is a donor node corresponding to an established F1 connection.

6. The method according to claim 4, wherein the first indication information is from a second donor node, and the second donor node is a donor node corresponding to an established radio resource control RRC connection.

7. The method according to any one of claims 1 to 3, wherein the method further comprises:
when the identification information of the current parent node belongs to the identification information of the P parent nodes, determining to perform the distributed unit migration.

8. The method according to any one of claims 1 to 7, wherein determining, based on the first configuration information, the address information of the target donor node corresponding to the identification information of the current parent node comprises:
determining, based on the first configuration information, address information of N candidate target donor nodes corresponding to the identification information of the current parent node; and
determining the address information of the target donor node from the address information of the N candidate target donor nodes corresponding to the identification information of the current parent node, wherein
N is an integer greater than or equal to 1 and less than or equal to M.

9. The method according to any one of claims 1 to 8, wherein the method further comprises:
receiving the identification information of the current parent node.

10. The method according to any one of claims 1 to 9, wherein the first configuration information further comprises node identifiers of the M candidate target donor nodes.

11. A communication method, comprising:
receiving first configuration information from an operation, administration, and maintenance device, wherein the first configuration information comprises identification information of P source donor nodes and address information of M candidate target donor nodes, there is a correspondence between the identification information of the P source donor nodes and the address information of the M candidate target donor nodes, and P and M are integers greater than or equal to 1;
when it is determined to perform distributed unit migration, determining, based on the first configuration information, address information of a target donor node corresponding to identification information of a first donor node, wherein the first donor node is a donor node corresponding to an established F1 connection; and
establishing an F1 connection to the target donor node based on the address information of the target donor node.

12. The method according to claim 11, wherein the method further comprises:
sending identification information of the target donor node to a CU of the first donor node, wherein the first donor node is a donor node corresponding to an established F1 connection.

13. The method according to claim 12, wherein identification information of a p^{th} source donor node comprises one or more of the following information: cell identification information of a cell controlled by the p^{th} source donor node, a node name of the p^{th} source donor node, address information of the p^{th} source donor node, and a node identifier of the p^{th} source donor node, wherein p is an integer greater than or equal to 1 and less than or equal to P.

14. The method according to any one of claims 11 to 13, wherein the method further comprises:
when first indication information is received, determining to perform the distributed unit migration, wherein the first indication information indicates to perform the distributed unit migration.

15. The method according to claim 14, wherein the first indication information is from the first donor node.

16. The method according to claim 14, wherein the first indication information is from a second donor node, and the second donor node is a donor node corresponding to an established RRC connection.

17. The method according to any one of claims 11 to 13, wherein the method further comprises:
when the identification information of the first donor node belongs to the identification information of the P source donor nodes, determining to perform the distributed unit migration.

18. The method according to any one of claims 11 to 17, wherein determining, based on the first configuration information, the address information of the target donor node corresponding to the identification information of the first donor node comprises:
determining, based on the first configuration information, address information of N candidate target donor nodes corresponding to the identification information of the first donor node; and
determining the address information of the target donor node from the address information of the N candidate target donor nodes corresponding to the identification information of the first donor node, wherein
N is an integer greater than or equal to 1 and less than or equal to M.

19. The method according to any one of claims 11 to 18, wherein the method further comprises:
receiving the identification information of the first donor node.

20. The method according to any one of claims 11 to 19, wherein the first configuration information further comprises node identifiers of the M candidate target donor nodes.

21. A communication method, comprising:
receiving first configuration information from an operation, administration, and maintenance device, wherein the first configuration information comprises identification information of P candidate target donor nodes and address information of M candidate target donor nodes, there is a correspondence between the identification information of the P candidate target donor nodes and the address information of the M candidate target donor nodes, and P and M are integers greater than or equal to 1;
when it is determined to perform distributed unit migration, determining, based on the first configuration information, address information of a target donor node corresponding to identification information of Q candidate target donor nodes, wherein Q is an integer greater than or equal to 1; and
establishing an F1 connection to the target donor node based on the address information of the target donor node.

22. The method according to claim 21, wherein the method further comprises:
sending identification information of the target donor node to a CU of a first donor node, wherein the first donor node is a donor node corresponding to an established F1 connection.

23. The method according to claim 21 or 22, wherein identification information of a p^{th} candidate target donor node comprises one or more of the following information: cell identification information of a cell controlled by the p^{th} candidate target donor node, a node name of the p^{th} candidate target donor node, and a node identifier of the p^{th} candidate target donor node, wherein p is an integer greater than or equal to 1 and less than or equal to P.

24. The method according to any one of claims 21 to 23, wherein the method further comprises:
when first indication information is received, determining to perform the distributed unit migration, wherein the first indication information indicates to perform the distributed unit migration.

25. The method according to claim 24, wherein the first indication information further indicates the identification information of the Q candidate target donor nodes.

26. The method according to any one of claims 21 to 25, wherein the first indication information is from a first donor node, and the first donor node is a donor node corresponding to an established F1 connection.

27. The method according to any one of claims 21 to 25, wherein the first indication information is from a second donor node, and the second donor node is a donor node corresponding to an established RRC connection.

28. The method according to any one of claims 21 to 27, wherein determining, based on the first configuration information, the address information of the target donor node corresponding to the identification information of the Q candidate target donor nodes comprises:
when identification information of at least one candidate target donor node in the identification information of the Q candidate target donor nodes belongs to the identification information of the P candidate target donor nodes, determining, based on the first configuration information, address information of N candidate target donor nodes corresponding to the identification information of the at least one candidate target donor node; and
determining the address information of the target donor node from the address information of the N candidate target donor nodes corresponding to the identification information of the at least one candidate target donor node, wherein
N is an integer greater than or equal to 1 and less than or equal to M.

29. The method according to any one of claims 21 to 28, wherein the first configuration information further comprises node identifiers of the M candidate target donor nodes.

30. A communication apparatus, wherein the communication apparatus comprises a processing module and a transceiver module, and the processing module and the transceiver module are configured for the communication apparatus to implement the method according to any one of claims 1 to 10, or implement the method according to any one of claims 11 to 20, or implement the method according to any one of claims 21 to 29.

31. A communication apparatus, wherein the communication apparatus comprises a processor, the processor is coupled to a memory, the memory is configured to store a program or instructions, and when the program or the instructions are executed by the processor, the communication apparatus is enabled to perform the method according to any one of claims 1 to 10, or the method according to any one of claims 11 to 20, or the method according to any one of claims 21 to 29.

32. A computer-readable storage medium, wherein the computer-readable storage medium stores a computer program or instructions, and when the computer program or the instructions are executed, a computer is enabled to perform the method according to any one of claims 1 to 10, or the method according to any one of claims 11 to 20, or the method according to any one of claims 21 to 29.

33. A computer program product, comprising a computer program or instructions, wherein when the computer program or the instructions are executed, a computer is enabled to perform the method according to any one of claims 1 to 10, or the method according to any one of claims 11 to 20, or the method according to any one of claims 21 to 29.
